(19) Europäisches Patentamt / European Patent Office / Office européen des brevets

(11) **EP 3 133 177 B1**

(12) **EUROPEAN PATENT SPECIFICATION**

(45) Date of publication and mention
of the grant of the patent:
**02.09.2020 Bulletin 2020/36**

(51) Int Cl.:
***C22B 23/00*** (2006.01)          ***C22B 3/08*** (2006.01)
***C22B 34/32*** (2006.01)

(21) Application number: **15780623.3**

(22) Date of filing: **27.03.2015**

(86) International application number:
**PCT/JP2015/059674**

(87) International publication number:
**WO 2015/159685 (22.10.2015 Gazette 2015/42)**

(54) **WET-MODE NICKEL OXIDE ORE SMELTING METHOD**

NASSSCHMELZVERRFAHREN FÜR NICKELOXIDERZ

PROCÉDÉ DE FUSION DE MINERAI D'OXYDE DE NICKEL EN MODE HUMIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2014 JP 2014086590**

(43) Date of publication of application:
**22.02.2017 Bulletin 2017/08**

(73) Proprietor: **Sumitomo Metal Mining Co., Ltd.
Tokyo 105-8716 (JP)**

(72) Inventors:
• **OHARA Go**
**Tokyo 105-8716 (JP)**
• **KAN Yasumasa**
**Tokyo 105-8716 (JP)**
• **IMAMURA Masaki**
**Tokyo 105-8716 (JP)**

(74) Representative: **Barker Brettell LLP
100 Hagley Road
Edgbaston
Birmingham B16 8QQ (GB)**

(56) References cited:
EP-A1- 2 910 655          EP-A1- 2 990 495
WO-A1-2014/125558          WO-A1-2014/175093
JP-A- 2010 100 915          JP-A- 2013 095 971
JP-A- 2013 095 971

**Description**

Technical Field

The present invention relates to a hydrometallurgical process for nickel oxide ore, specifically relates to a hydrometallurgical process for nickel oxide ore for recovering nickel and cobalt from nickel oxide ore using a high pressure acid leach process including an ore processing step, a leaching step, a solid-liquid separation step, a neutralization step, a zinc removal step, a sulfurization step, and a final neutralization step, in which problems are solved by suppressing the wear, caused by an ore slurry produced from the ore processing step, of facilities such as conveyance piping and a pump for conveying the ore slurry and improving the durability of the facilities to thereby reduce the amount of a final neutralized residue produced from the final neutralization step and allow the compression of the capacity of a tailings dam for storing a leach residue, a neutralized precipitate, and the like to be discarded to thereby reduce cost and environmental risk; and impurity components which can be recycled and effectively used as a resource can be separated and recovered.

Background Art

In recent years, raw material cost for metal smelting has significantly increased with the further progress of oligopolization of mining rights for mineral resources, such as coal, iron, copper, nickel, cobalt, chromium, and manganese. Therefore, also in metal smelting, technical development has been made, as a measure for cost reduction, for using a low-grade raw material which has not been used since it is disadvantageous in terms of cost.

For example, since a material excellent in corrosion resistance at high temperature and high pressure has been developed in nickel smelting, a hydrometallurgical process based on a high pressure acid leach process, in which nickel oxide ore is subjected to acid leach with sulfuric acid under pressure, has attracted attention.

The high pressure acid leach process is advantageous in terms of energy cost since it does not have dry process steps such as a reduction step and a drying step unlike a pyrometallurgical process which is a conventional common smelting method for nickel oxide ore, and the high pressure acid leach process is continuously considered to be a promising technique as a smelting method for low-grade nickel oxide ore.

Therefore, in order to improve the completeness as a smelting process, various proposals have been made, focusing on a leaching step at a high temperature under pressure, with respect to improvement in the leaching rate of nickel and cobalt, solution purification of a leachate, and reduction in the amount of operation materials used, and the like.

As an example of the process for utilizing leaching at a high temperature under pressure, there has been proposed a method for recovering valuable metals such as nickel, cobalt, and manganese from oxide ores containing these metals, the method including steps (a) to (c) (refer to, for example, Patent Literature 1) as below.

Step (a): subjecting previously slurried oxide ore to atmospheric leach under an acidic condition with sulfuric acid using a high pressure acid leach solution obtained in step (b) to obtain an atmospheric leach solution and an atmospheric leach residue;

Step (b): allowing the atmospheric leach residue obtained in step (a) to react with sulfuric acid in an oxidizing atmosphere at high temperature and high pressure to obtain a high pressure acid leach solution; and

Step (c): adding a neutralizing agent to the atmospheric leach solution obtained in step (a) to neutralize the same, followed by adding an alkali sulfide compound thereto to recover nickel and cobalt in the leachate as sulfides.

In the method including the above steps, the nickel leaching rate from ores is improved by performing two-stage leaching in which the ore slurry is subjected to atmospheric leach (step (a)) and then the atmospheric leach residue is subjected to high pressure acid leach (step (b)), and at the same time, the load of the neutralization step (step (c)) is reduced by neutralizing the excess acid contained in the leachate from the high pressure acid leach with the alkali component contained in the atmospheric leach residue.

However, there have been problems in that the two-stage leaching has increased the number of equipment to increase cost and labor, and a large amount of dilute solution produced in the washing of the leach residue has required cost.

Therefore, in order to solve these problems, a method including steps (1) to (4) described below has been proposed (refer to, for example, Patent Literature 2) as another process of utilizing leaching at high temperature under pressure.

(1) Leaching step: forming a slurry of nickel oxide ore, adding sulfuric acid to the slurry, and stirring the slurry at a temperature of 220 to 280°C to form a leach slurry;
(2) Solid-liquid separation step: washing the leach slurry obtained in the previous leaching step using a multi-stage thickener to separate it into a leachate containing nickel and cobalt and a leach residue;
(3) Neutralization step: adjusting the leachate obtained in the solid-liquid separation step with calcium carbonate to a pH of 4 or less while suppressing the oxidation of the leachate to produce a neutralized precipitate containing trivalent iron and separate the leachate into a neutralized precipitate slurry and mother liquor for nickel recovery; and
(4) Sulfurization step: blowing hydrogen sulfide gas into the mother liquor for nickel recovery obtained in the neutralization step to produce a sulfide containing nickel and cobalt and separate the sulfide from a barren liquor.

Here, an outline of a practical plant based on the technique disclosed in Patent Literature 2 will be described with reference to the drawings.

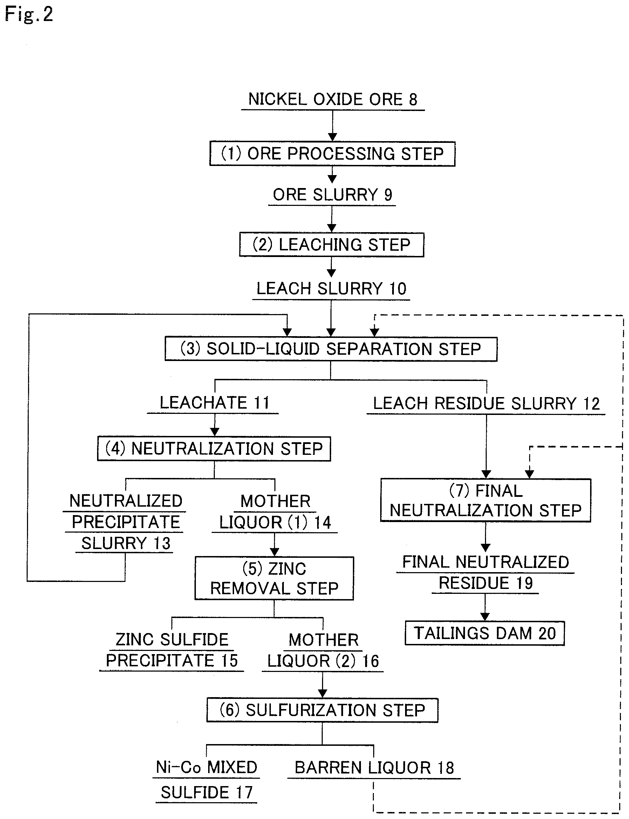

Figure 2 is a smelting process diagram illustrating an example of practical plants based on the hydrometallurgical process for nickel oxide ore disclosed in Patent Literature 2.

As shown in Figure 2, in (1) ore processing step, nickel oxide ore 8 first forms a mixed solution with water, and the mixed solution is then subjected to foreign matter removal therefrom and ore particle size adjustment to form an ore slurry 9.

Next, in (2) leaching step, the resulting ore slurry 9 is subjected to high pressure acid leach using sulfuric acid to form a leach slurry 10.

The resulting leach slurry 10 is subjected to (3) solid-liquid separation step followed by multi-stage washing to be separated into a leachate 11 containing nickel and cobalt and a leach residue slurry 12.

The separated leachate 11 is subjected to (4) neutralization step to be separated into a neutralized precipitate slurry 13 containing trivalent iron hydroxide and mother liquor (1) 14 for nickel recovery (1).

The separated mother liquor (1) 14 as one product is subjected to (5) zinc removal step of adding a sulfurizing agent to be separated into a zinc sulfide precipitate 15 containing zinc sulfide and mother liquor (2) 16 for nickel recovery.

The mother liquor (2) 16 as the other product is subjected to (6) sulfurization step to be separated into a mixed sulfide 17 containing nickel and cobalt and a barren liquor 18 from which nickel and the like are removed. The barren liquor 18 is used as washing water for a leach residue in (3) solid-liquid separation step.

Finally, the leach residue slurry 12 is subjected to (7) final neutralization step together with excess barren liquor 18 to be neutralized, and a final neutralized residue 19 is stored in a tailings dam 20.

The features of the method disclosed in Patent Literature 2 include the following: the consumption of a neutralizing agent and the amount of precipitates in the neutralization step can be reduced by the multi-stage washing of the leach slurry in the solid-liquid separation step; since the true density of the leach residue can be increased, solid-liquid separation characteristics can be improved; and the process is simplified by performing the leaching step only by high pressure acid leach. Thus, the method disclosed in Patent Literature 2 is considered to be advantageous against the method proposed in Patent Literature 1.

Moreover, it is considered that, when the barren liquor is used as a washing solution to be used in the solid-liquid separation step, nickel adhering to the leach residue can be leached and recovered utilizing remaining sulfuric acid, and repeated use of water can be performed effectively and efficiently.

Further, it is considered that, when the neutralized precipitate slurry is transferred to the solid-liquid separation step, the loss of nickel can be reduced, which is more advantageous.

However, the practical plant using this method will have the following problems.

A first problem is the wear of facilities, which is required to be suppressed.

The nickel oxide ore is conveyed between the steps in the form of a slurry. The wear of the materials of facilities is significantly accelerated by the conveyed slurry, and especially the frequency of maintenance of the facilities such as piping and pumps in the leaching step is high, which greatly causes an increase in maintenance cost and a reduction in the rate of plant operation.

A second problem is the amount of the final neutralized residue, which is required to be reduced.

The leach residue obtained in the solid-liquid separation step is combined with the excess barren liquor produced from the sulfurization step, and the resulting mixture is rendered harmless by the neutralization of adding a limestone slurry or a slaked lime slurry thereto.

The final neutralized residue produced from the final neutralization step (hereinafter, may be referred to as final neutralization step), which is stored in a tailings dam, contains not only impurity components such as hematite and chromite in the leach reside but also gypsum formed by the neutralization. Therefore, the final neutralized residue cannot be recycled, and the construction and the maintenance of the tailings dam have been a heavy cost burden.

Therefore, a solution to the above problems has been required for a practical plant using a hydrometallurgical process based on a conventional high pressure acid leach process.

Further, in order to solve the above problems effectively and economically, it is an effective means to efficiently separate and recover impurity components contained in the ore or the leach residue, and it has also been required to recycle and effectively use these impurity components.

Therefore, the present applicant has proposed, in Patent Literature 3, a hydrometallurgical process for nickel oxide ore including, in the hydrometallurgical steps based on a high pressure acid leach process, a step of a physically separating and recovering, from an ore slurry, particles containing at least one selected from silica mineral, chromite, and silica-magnesia mineral and a step of a physically separating and recovering hematite particles in a leach residue slurry. However, further improvement has been required for efficiently separating and recovering the impurity components contained in the ore or the leach residue.

JP 2013 095971 A discloses a hydrometallurgical process for recovering nickel from a nickel oxide ore including at least one of: a step A to separate and recover chromite particles in the ore slurry produced from an ore treatment step by a recovery process including a gravity separation method; a step B-1 to process the ore slurry, whose Cr quality is deteriorated after passing the A step, in a leaching step and a solid-liquid separation step to neutralize the leaching solution after the solid-liquid separation step with Mg-based alkali such as Mg(OH); and a step B-2 to process the ore slurry, whose Cr quality is deteriorated after passing the A step, in a leaching step and the solid-liquid separation step, and neutralization of the leaching residue slurry after the solid-liquid separation process is performed with the Mg-based alkali such as the Mg(OH), to recover hematite particles.

Citation List

Patent Literature

   Patent Literature 1:
   Japanese Patent Laid-Open No. H06-116660
   Patent Literature 2:
   Japanese Patent Laid-Open No. 2005-350766
   Patent Literature 3:
   Japanese Patent Laid-Open No. 2010-95788

Summary of Invention

Technical Problem

In view of such circumstances, an object of the present invention is to provide, in view of the problems of conventional art, a hydrometallurgical process for nickel oxide ore for recovering nickel and cobalt from nickel oxide ore using a high pressure acid leach process including an ore processing step, a leaching step, a solid-liquid separation step, a neutralization step, a zinc removal step, a sulfurization step, and a final neutralization step, in which the problems are solved by suppressing the wear, caused by an ore slurry produced from the ore processing step, of facilities such as conveyance piping and a pump for conveying the ore slurry and improving the durability of the facilities to thereby increase the percentage of a solid in the ore slurry to simplify the facilities in the ore processing step, and by reducing the amount of a final neutralized residue produced from the final neutralization step and compressing the capacity of a tailings dam for storing a leach residue, a neutralized precipitate, and the like to be discarded to thereby reduce cost and environmental risk; and impurity components such as chromite and hematite which can be recycled and effectively used as a resource can be separated and recovered.

Solution to Problem

In order to achieve the above object, the present inventors have made extensive and intensive studies on the solution of the above problems in the hydrometallurgical process for recovering nickel and cobalt from nickel oxide ore by a high pressure acid leach process. As a result, the present inventors have found that a method including: step (A) of separating and recovering, by a specific method, particles containing chromite in an ore slurry produced from an ore processing step; and, after a leaching step and a solid-liquid separation step after step (A), at least one step selected from steps (B) of neutralizing and recovering by a specific method which does not produce gypsum is effective as a solution of the above problems, and the present invention has been completed based on this finding.

Specifically, the first aspect of the present invention is a hydrometallurgical process for nickel oxide ore for recovering nickel and cobalt using a high pressure acid leach process including an ore processing step, a leaching step, a solid-liquid separation step, a neutralization step, a zinc removal step, a sulfurization step, and a final neutralization step, the hydrometallurgical process further comprising,

step (A): a step of separating chromite particles from an ore slurry produced in the ore processing step by a recovery process of performing specific gravity separation which includes a step of using a density separator and a step of using a spiral concentrator and then performing magnetic separation, and then classifying the chromite particles under a condition of 53 $\mu$m or more and less than 300 $\mu$m to recover a high-concentration chromite concentrate having the grade of chromium(III) oxide of 41% by weight or more.

Specifically, the second aspect of the present invention is a hydrometallurgical process for nickel oxide ore for recovering nickel and cobalt using a high pressure acid leach process including an ore processing step, a leaching step, a solid-liquid separation step, a neutralization step, a zinc removal step, a sulfurization step, and a final neutralization step according to the first aspect, the hydrometallurgical process further comprising the following step (B-1) or step (B-2) after the step (A):

step (B-1): a neutralization step of subjecting a leachate to neutralization with at least one of a calcium-based neutralizing agent and a magnesium-based neutralizing agent, the leachate being produced by subjecting the ore slurry, in which the chromium grade has been reduced by separating the chromite particles in the step (A), sequentially to the leaching step and the solid-liquid separation step,; and

step (B-2): a neutralization step of subjecting a leach residue slurry to neutralization with a magnesium-based neutralizing agent, the leach residue slurry being produced by subjecting the ore slurry, in which the chromium grade has been reduced by separating the chromite particles in the step (A), sequentially to the leaching step and the solid-liquid separation step, to thereby recover hematite particles from the leach residue slurry.

The third aspect of the present invention is a hydrometallurgical process for nickel oxide ore for recovering nickel and cobalt using a high pressure acid leach process including an ore processing step, a leaching step, a solid-liquid separation step, a neutralization step, a zinc removal step, a sulfurization step, and a final neutralization step according to the first aspect, the hydrometallurgical process further comprising the following step (B-1) and step (B-2) after the step (A):

step (B-1): a neutralization step of subjecting a leachate to neutralization with at least one of a calcium-based neutralizing agent and a magnesium-based neutralizing agent, the leachate being produced by subjecting the ore slurry, in which the chromium grade has been reduced by separating the chromite particles in the step (A), sequentially to the leaching step and the solid-liquid separation step; and

step (B-2): a neutralization step of subjecting a leach residue slurry to neutralization with a magnesium-based neutralizing agent, the leach residue slurry being produced by subjecting the ore slurry, in which the chromium grade has been reduced by separating the chromite particles in the step (A), sequentially to the leaching step and the solid-liquid separation step, to thereby recover hematite particles from the leach residue slurry.

The fourth aspect of the present invention is the hydrometallurgical process for nickel oxide ore according to the first to third aspects, wherein the recovery process in the step (A) comprises subjecting the ore slurry to classification with a cyclone to form a particulate iron-leaned ore slurry in which fine iron hydroxide particles have been reduced, and then recovering chromite particles contained in the particulate iron-leaned ore slurry from the particulate iron-leaned ore slurry as a chromite concentrate using specific gravity separation.

The fifth aspect of the present invention is the hydrometallurgical process for nickel oxide ore according to the fourth aspect, wherein the recovery process in the step (A) comprises subjecting the ore slurry to classification with a cyclone without diluting the slurry concentration of the ore slurry.

The sixth aspect of the present invention is the hydrometallurgical process for nickel oxide ore according to the first to fifth aspects, wherein the recovery process in the step (A) comprises collecting a whole amount of the chromite excluding unavoidable loss into an underflow in the classification with the cyclone.

The seventh aspect of the present invention is the hydrometallurgical process for nickel oxide ore according to the first aspect, wherein the step of using a density separator comprises treating a concentrated slurry with the density separator twice or more.

The eighth aspect of the present invention is the hydrometallurgical process for nickel oxide ore according to the first aspect, wherein the step of using a spiral concentrator comprises treating a concentrated slurry with the spiral concentrator twice or more.

The ninth aspect of the present invention is the hydrometallurgical process for nickel oxide ore according to the first or eighth aspects, wherein a pulp content of the slurry fed to the spiral concentrator is 15 to 35% by weight of solid. Preferably, the pulp content may be 20 to 30% by weight of solid.

The tenth aspect of the present invention is the hydrometallurgical process for nickel oxide ore according to the first or seventh aspects, wherein an amount of Teeter water fed to the density separator is 0.5 to 7.0 $[m^3 \cdot h^{-1}/m^2]$.

The eleventh aspect of the present invention is the hydrometallurgical process for nickel oxide ore according to the first to tenth aspects, wherein the chromite concentrate separated by specific gravity separation is subjected to magnetic separation which is a physical separation to remove magnetite from the chromite concentrate as a magnetic material and recover a non-magnetic material as a high-concentration chromite concentrate.

The twelfth aspect of the present invention is the hydrometallurgical process for nickel oxide ore according to the second or third aspect, wherein the step (B-2) comprises setting pH after the neutralization at 4 to 7 and after the neutralization, performing final neutralization with an alkali other than the magnesium-based neutralizing agent.

The thirteenth aspect of the present invention is the hydrometallurgical process for nickel oxide ore according to the second or third aspect, wherein the step (B-2) comprises subjecting the leach residue slurry or a neutralized residue slurry including the leach residue slurry to classification with a cyclone to recover a classified fine particle portion obtained by the classification as a concentrate of hematite.

The fourteenth aspect of the present invention is the hydrometallurgical process for nickel oxide ore according to the first to thirteenth aspects, wherein

the ore processing step is a step of performing removal of foreign matter from mined raw ore and particle size adjustment of the ore to form an ore slurry;

the leaching step is a step of adding sulfuric acid to the ore slurry and stirring the resulting mixture at high temperature and high pressure to form a leach slurry composed of a leach residue and a leachate;

the solid-liquid separation step is a step of subjecting the leach slurry to multi-stage washing to obtain a leachate containing nickel and cobalt and a leach residue slurry;

the neutralization step is a step of adding an alkali to the leachate to form a neutralized precipitate slurry containing trivalent iron and mother liquor for nickel recovery;

the zinc removal step is a step of blowing hydrogen sulfide gas into the mother liquor to form a zinc sulfide precipitate slurry and mother liquor for nickel and cobalt recovery;

the sulfurization step is a step of blowing hydrogen sulfide into the mother liquor for nickel and cobalt recovery to produce a mixed sulfide containing nickel and cobalt and a barren liquor; and

the final neutralization step is a step of adding excess of the barren liquor to the leach residue slurry and adjusting pH to 8 to 9 to obtain a final neutralized residue.

The fifteenth aspect of the present invention is the hydrometallurgical process for nickel oxide ore according to the first to fourteenth aspects, wherein the particle size adjustment in the ore processing step is performed by sieving with a particle size of 2 mm or less.

Advantageous Effect of Invention

The hydrometallurgical process for nickel oxide ore of the present invention produces an industrially remarkable effect because conventional problems can be solved as shown below by adopting step (A) and step (B) in a hydrometallurgical process for recovering nickel and cobalt from nickel oxide ore using a high pressure acid leach process including an ore processing step, a leaching step, a solid-liquid separation step, a neutralization step, a zinc removal step, a sulfurization step, and a final neutralization step.

By adopting step (A) in the present invention, particles containing chromite in the ore slurry produced from the ore processing step can be separated and recovered to thereby significantly suppress the wear of facilities such as piping and a pump during the conveyance of the ore slurry.

Further, since chromite is separated before the hydrometallurgy, a reduction in the amount of the leach residue can be expected, and the amount of a final neutralized residue can also be reduced. Furthermore, if the separated chromite is concentrated, the concentrate can also be effectively used as a resource.

By adopting step (B) in the present invention, hematite in the leach residue produced from the solid-liquid separation step is separated and recovered to thereby achieve a reduction in the amount of a final neutralized residue produced from the final neutralization step, thereby capable of compressing the capacity of a tailings dam for storing a leach residue, a neutralized precipitate, and the like to be discarded to thereby reduce cost and environmental risk, and the hematite separated and recovered can also be effectively used as an iron resource.

Brief Description of Drawings

Figure 1 is a smelting process diagram showing an embodiment of the hydrometallurgical process for nickel oxide ore according to the present invention.
Figure 2 is a smelting process diagram showing an example of a practical plant based on a conventional hydrometallurgical process for nickel oxide ore (Patent Literature 2).
Figure 3 is an execution flow chart in Example 1 of the present invention.
Figure 4 is an execution flow chart in Example 2 of the present invention.
Figure 5 is an execution flow chart in Comparative Example 1 of the present invention.
Figure 6 is an execution flow chart in Comparative Example 4 of the present invention.

Description of Embodiments

The hydrometallurgical process for nickel oxide ore of the present invention, for recovering nickel and cobalt using a high pressure acid leach process including an ore processing step, a leaching step, a solid-liquid separation step, a neutralization step, a zinc removal step, a sulfurization step, and a final neutralization step, includes step (A), or after passing through step (A), includes step (B-1) and/or step (B-2).

[Steps]

. Step (A)

Step (A) is a step of separating chromite particles from an ore slurry produced in the ore processing step by a recovery process including specific gravity separation, and then classifying the chromite particles to recover a high-concentration chromite concentrate.

. Step (B)

Step (B-1)

The ore slurry, in which the Cr grade has been reduced in step (A), is treated in the leaching step and the solid-liquid separation step, and a leachate after the solid-liquid separation step is neutralized in step (B-1) with a Mg-based neutralizing agent such as $Mg(OH)_2$ and MgO and a Ca-based neutralizing agent such as $CaCO_3$ and $Ca(OH)_2$.

Step (B-2)

The ore slurry, in which the Cr grade has been reduced in step (A), is treated in the leaching step and the solid-liquid separation step, and a leach residue slurry after the solid-liquid separation step is neutralized in step (B-2) with a Mg-based neutralizing agent such as $Mg(OH)_2$ and MgO to recover hematite particles.

It is important for solving problems that the production method of the present invention includes step (A) as an essential step.

By adopting step (A), particles containing chromite in the ore slurry produced from the ore processing step as the previous step are separated and recovered to thereby impart the effect of suppressing the wear of facilities such as piping and a pump during the conveyance of the ore slurry.

That is, the wear is suppressed by separating chromite having extremely high hardness generally contained in nickel oxide ore. Further, a reduction in the amount of a leach residue can be expected by removing chromite in advance from the ore slurry before hydrometallurgy, and, as a result, the amount of a final neutralized residue can also be reduced.

Furthermore, if the chromite which has been separated and recovered can be sufficiently concentrated, it can also be effectively used as a resource.

On the other hand, by adopting step (B) including step (B-1) and step (B-2), hematite in the leach residue produced from the solid-liquid separation step is separated and recovered to thereby reduce the amount of a final neutralized residue produced from the final neutralization step, thereby capable of compressing the capacity of a tailings dam for storing a leach residue, a neutralized precipitate, and the like to be discarded to thereby reduce cost and environmental risk. At the same time, the hematite separated and recovered can also be effectively used as an iron resource.

That is, since iron in the nickel oxide ore is hydrolyzed at a high temperature in the leaching step, iron is contained in the form of hematite in the final neutralized residue. However, since the final neutralized residue contains not only chromite in the leach residue but also gypsum formed by neutralization using a neutralizing agent containing Ca, the iron grade is as low as 30 to 40% by weight, and it is difficult to effectively use the final neutralized residue as it is as an ironmaking raw material or the like.

This is because sulfur (gypsum; calcium sulfate), chromium (chromite), and the like contained in the final neutralized residue are components that influence the distribution of minor components into pig iron, the quality of steel products, and the like, and it is required to suppress the inclusion of these impurity elements.

In contrast, since the neutralization in step (B-2) of the present invention is performed only by using a Mg-based neutralizing agent, $MgSO_4$ having high solubility is produced to suppress the fixing of sulfur to a solid and allow hematite having a low sulfur grade to be separated and recovered.

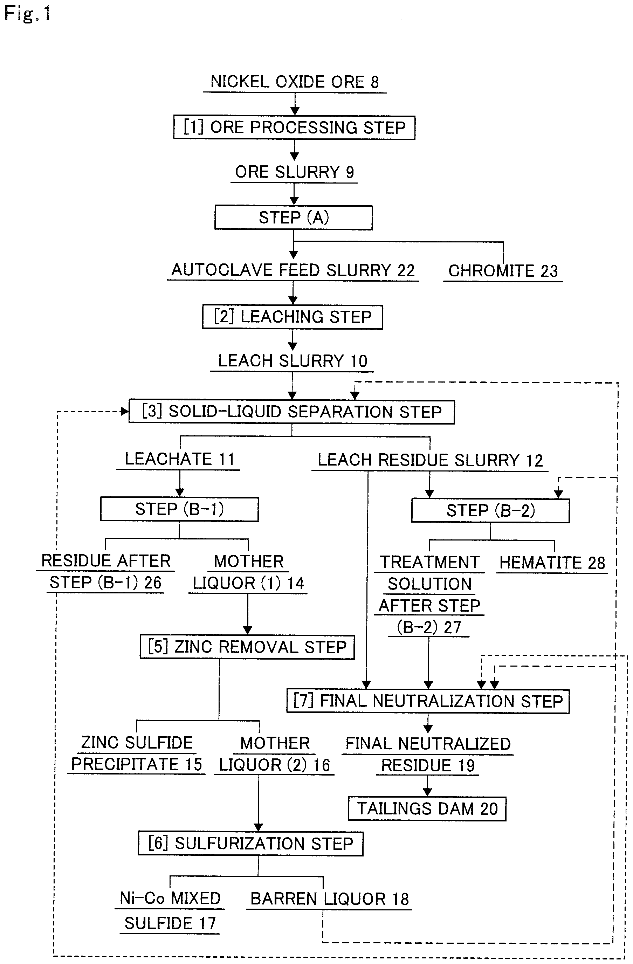

Next, the outline of the hydrometallurgical process for nickel oxide ore of the present invention will be described with reference to Figure 1.

Figure 1 is a smelting process diagram showing an embodiment of the hydrometallurgical process for nickel oxide ore according to the present invention.

As shown in Figure 1, in [1] ore processing step, nickel oxide ore 8 first forms a mixed solution with water, and foreign matter removal from the mixed solution and ore particle size adjustment are then performed to form an ore slurry 9.

Subsequently, the ore slurry 9 is subjected to newly provided step (A) to separate and recover chromite 23. An autoclave feed slurry 22 as the other product is subjected to [2] leaching step.

Here, valuable components such as nickel and cobalt are leached with sulfuric acid from the autoclave feed slurry 22 using an autoclave or the like to form a leach slurry 10.

The formed leach slurry 10 is subjected to [3] solid-liquid separation step using a multi-stage thickener or the like to be separated into a leachate 11 containing nickel and cobalt and a leach residue slurry 12.

The separated leachate 11 is subjected to step (B-1) to be separated into a residue after step (B-1) 26 containing trivalent iron hydroxide as a main component and mother liquor (1) 14 containing nickel.

The separated mother liquor (1) 14 as one product is subjected to [5] zinc removal step of adding a sulfurizing agent to be separated into a zinc sulfide precipitate 15 containing zinc sulfide and mother liquor (2) 16 for nickel recovery.

Next, the mother liquor (2) 16 as the other product is subjected to [6] sulfurization step of adding a sulfurizing agent to be separated into a mixed sulfide 17 containing nickel and cobalt and a barren liquor 18.

Note that the barren liquor 18 is used as washing water for a leach residue in [3] solid-liquid separation step. The barren liquor 18 may also be fed to the final neutralization step.

A part of the leach residue slurry 12 is fed to step (B-2) together with excess barren liquor 18 and subjected to neutralization to separate and recover hematite 28.

At this time, a treatment solution after step (B-2) 27 and the leach residue slurry 12 which has not be fed to step (B-2) are fed to [7] final neutralization step and neutralized to a pH of about 8 to 9.

A resulting final neutralized residue 19 is stored in a tailings dam 20.

Hereinafter, each step will be described further in detail.

[1] Ore processing step and Step (A)

The ore processing step is a step of performing foreign matter removal and ore particle size adjustment to form an ore slurry.

In this step, nickel oxide ore is sieved by elutriation or the like to separate foreign matter that cannot be leached in the leaching step, an ore that is hardly transported with a pump, and the like.

Generally, the sieving particle size is about 2 mm, and an ore having a particle size larger than about 2 mm is classified and separated.

A slurry is formed of an ore passed through the sieving treatment, and the slurry is then settled and concentrated to prepare an autoclave feed slurry in which the solid concentration in the slurry (hereinafter, referred to as slurry concentration) has been adjusted. Note that the slurry concentration may be generally suitably adjusted to about 30 to 45% by weight.

The nickel oxide ore serving as a raw material to be treated by the hydrometallurgical process of the present invention is mainly so-called lateritic ore, such as limonite ore and saprolite ore.

The nickel content of the lateritic ore is normally 0.8 to 2.5% by weight, and nickel is contained as hydroxide or hydrous silica-magnesia (magnesium silicate) mineral.

Further, the iron content is 10 to 50% by weight, and although iron is mainly in the form of trivalent hydroxide (goethite), divalent iron is partly contained in hydrous silica-magnesia mineral or the like. Silicic acid components are contained in silica mineral, such as quartz and cristobalite (amorphous silica), and hydrous silica-magnesia mineral.

Furthermore, most of chromium components are contained in an amount of 1 to 5% by weight as chromite mineral containing iron or magnesium. In addition, magnesia components are contained not only in hydrous silica-magnesia mineral but also in silica-magnesia mineral substantially containing no nickel which is unweathered and has high hardness.

As described above, in lateritic ore, silica mineral, chromite mineral, and silica-magnesia mineral are so-called gangue components which do not substantially contain nickel.

That is, the ore slurry produced from the ore processing step contains chromite which generally gives significant influence on the wear of facilities such as piping and a pump in the leaching step.

Therefore, it is desirable to separate and recover chromite in advance in the ore processing step from the ore slurry prepared in the ore processing step.

Here, the distribution state of each component in the ore particles constituting the ore slurry will be described.

The EPMA observation of nickel oxide ore shows that a portion having high chromium content is present as a single phase independent of a portion having high iron content in a relatively high ratio, and a large number of the portion having high chromium content has a particle size of 20 to 1000 $\mu$m.

This shows that the mineral containing chromium is contained at a higher level in particles having a size of about 20 $\mu$m or more, while the mineral containing nickel and iron is contained at a higher level in particles having a size of about 20 $\mu$m or less.

Therefore, in order to effectively separate and recover chromite from the ore slurry, it is important to slurry the ore after removing coarse particles, crush nickel oxide ore in the ore slurry so that it may have a suitable particle size, and set a suitable classification particle size.

Note that the crushed particle size at this time, which is determined in consideration of the original purpose for forming the ore slurry, is preferably about 2 mm or less.

Table 1 shows an example of the ore particle size distribution of the ore slurry obtained by crushing the ore to a particle size of about 2 mm or less and the grade of each component in each particle size section.

From Table 1, it can be seen that chromium, silicon, magnesium, and the like are concentrated in the coarse particle portions having a particle size of 75 $\mu$m or more, while iron is concentrated in the fine particle portion having a particle size of 75 $\mu$m or less.

[Table 1]

| Particle size [$\mu$m] | Distribution [% by weight] | Chemical composition [% by weight] | | | |
|---|---|---|---|---|---|
| | | Fe | Cr | Si | Mg |
| -2000+1400 | 0.9 | 36.0 | 2.0 | 14.0 | 6.0 |
| +850 | 1.8 | 37.0 | 3.0 | 13.0 | 6.0 |
| +355 | 2.7 | 33.0 | 3.0 | 12.0 | 5.0 |
| +75 | 5.3 | 42.0 | 5.0 | 9.0 | 3.0 |
| -75 | 89.3 | 47.0 | 3.0 | 6.0 | 2.0 |
| Average | 100.0 | 45.7 | 2.7 | 6.6 | 2.0 |

Next, step (A) is a step of separating and recovering chromite in the ore slurry produced from the ore processing step. Mineral particles of silica mineral, silica-magnesia mineral, or the like can also be separated and removed as intermediates of the step.

Note that step (A) may also be performed included in the ore processing step or performed following the ore processing step.

The method of step (A) is not particularly limited, but methods using various physical separation means to separate chromite from the ore slurry can be applied to the method of step (A). Among the physical separation means, in order to concentrate chromite up to, for example, 41 to 50 % by weight $Cr_2O_3$ in which chromite is easily recycled as a resource after it is separated and recovered, a wet-physical separation method including specific gravity separation and classification for recovery of the ore in the particle-size range in which chromite is concentrated are essential from the analysis of the distribution state of each component in the ore particles constituting the ore slurry.

That is, as shown in Table 1, the grade which can be concentrated by classification is limited, and separation utilizing specific-gravity difference is required in addition to classification.

The classification particle size in the classification may be any particle size as long as goethite containing nickel in the fine particle portion is efficiently separated, and is preferably selected from the range of 20 to 150 $\mu$m, more preferably 45 to 75 $\mu$m.

That is, the lower limit of the classification point that can be industrially performed is about 20 $\mu$m, and when the classification particle size is less than 20 $\mu$m, the concentration of chromite in the coarse particle portion will be insufficient, and nickel in the ore slurry used in the leaching step will be lost. On the other hand, when the classification particle size is more than 150 $\mu$m, the removal of silica mineral, chromite, and silica-magnesia in the fine particle portion will be insufficient.

Further, the technique in the classification is not particularly limited, but it is desirable to select cyclone classification which has high performance and is capable of large-amount treatment.

Generally, it is known that the specific gravity of chromite is higher than that of iron hydroxide such as goethite, and chromite that is coarse and has a high specific gravity and goethite that is fine and has a low specific gravity can be efficiently separated with a cyclone.

The operating pressure of the cyclone is desirably 0.1 to 0.3 MPa when separation performance and treatment speed are taken into consideration.

The shape of the cyclone is desirably adjusted so that the pulp content of the underflow may be 50% by weight or more.

Further, the pulp content of the ore slurry to be fed to the cyclone is, but not particularly limited to, preferably 10 to 30% by weight, more preferably 15 to 20% by weight.

The separation with the cyclone can be performed even if the pulp content is less than 10% by weight, but such a pulp content requires a large amount of water and is disadvantageous for the settling and concentration in a subsequent step. Further, if the pulp content is higher than 30% by weight, the viscosity of the slurry may increase to disturb the separation.

That is, when the pulp content after the ore processing step is set to the above range of 10 to 30% by weight, additional feeding of water is not required, and a tank for dilution is also not required. Therefore, the above pulp content range is preferred.

By optimizing the pulp content, the cyclone operating pressure, and the cyclone shape as described above, the distribution of chromite to the overflow can be mostly eliminated, which is preferred in terms of chromite recovery.

After goethite containing nickel is separated and removed as much as possible by the classification using a cyclone described above, chromite is further concentrated with a specific gravity separation apparatus.

The specific gravity separation apparatus to be used is not particularly limited, but it is preferred to select at least one of a shaking table, a density separator, and a spiral concentrator, and it is more preferred to select at least one of a density separator and a spiral concentrator, which are suitable for large-amount treatment.

When a spiral concentrator is used, the pulp content of the slurry fed thereto is preferably more than 15% by weight and less than 35% by weight, more preferably more than 20% by weight and less than 30% by weight.

When the pulp content is 15% by weight or less, the separation performance may be deteriorated, and when the pulp content is 35% by weight or more, the flow of particles on the chromite concentration side (inner side) may stagnate during the separation with a spiral concentrator to produce build-up to prevent sufficient separation.

Further, when a spiral concentrator is used, the recovery rate of chromite will be increased by subjecting chromite (outer side) concentrated to 15% by weight or more and 40% by weight or less to spiral treatment several times.

Further, when a density separator is used, the amount of Teeter water is desirably set to 0.5 to 7.0 $[m^3 \cdot h^{-1}/m^2]$.

Here, Teeter water refers to water for floating the above ore particles in the density separator. Teeter water floats the ore particles to form a fluidized bed to gather heavy particles in a lower layer. Teeter water may also be referred to as fluidization water.

When the amount of Teeter water is less than 0.5, the effect of hindered settling will be small, and specific gravity separation will not be efficiently performed.

On the other hand, when the amount of Teeter water is larger than 7.0, even chromite particles may be caused to move upward to be lost on the overflow side. In this case, the amount of chromite in the slurry to be fed to the leaching step increases, which is disadvantageous from the point of view of not only the recovery of chromite but also the reduction in the Cr grade in hematite.

Further, the $Cr_2O_3$ grade is increased by treating the slurry with a density separator several times.

Furthermore, the $Cr_2O_3$ grade in chromite can be concentrated up to 41 to 50% by weight or more only by the specific gravity separation, but in order to concentrate chromite to higher concentration, it is desired to separate and remove magnetite contained in a very small amount.

Since the specific gravity of magnetite to be removed is extremely close to the specific gravity of chromite, magnetic separation is utilized.

The magnetic field strength in the magnetic separation is not particularly limited but varies depending on belt speed, belt thickness, and apparatus, and it is preferably in the range of 200 [Oe] to 2000 [Oe].

If the magnetic field strength is less than 200 [Oe], the magnetic field may be so weak that separation and removal of magnetite may be insufficient. On the other hand, if the magnetic field strength is more than 2000 [Oe], the removal of magnetite will be no problem, but even chromite may be magnetized to prevent magnetic separation.

Particularly desirably, a low-intensity magnetic separator may be used.

Further, after specific gravity separation or magnetic separation, chromite obtained by these treatments is subjected to classification.

For example, a Non-Mag slurry obtained by low-intensity magnetic separation can be subjected to classification with a classifier provided with a 53 μm-mesh screen and a 300 μm-mesh screen to thereby increase the $Cr_2O_3$ grade obtained by the classification.

[2] Leaching Step

The leaching step is a step of adding sulfuric acid to the ore slurry obtained through the ore processing step and step (A) and then stirring the resulting mixture at a temperature of 220 to 280°C to form a leach slurry including a leach residue and a leachate. In this step, a preheater, an autoclave, and a flash tank are used as main facilities.

In this leaching step, the leaching of nickel, cobalt and the like as sulfates and the fixation of leached iron sulfate as hematite are performed by the leaching reaction represented by reaction formulas (1) to (3) and the high temperature thermal hydrolysis reaction represented by reaction formulas (4) and (5).

However, since the fixation of iron ions does not proceed to completion, the liquid portion of the resulting leach slurry usually contains divalent and trivalent iron ions in addition to nickel, cobalt and the like.

[Formula 1]

[Leaching reaction]

$$MO + H_2SO_4 \rightarrow MSO_4 + H_2O \cdots \qquad (1)$$

(wherein M represents Ni, Co, Fe, Zn, Cu, Mg, Cr, Mn, or the like.)

$$2Fe(OH)_3 + 3H_2SO_4 \rightarrow Fe_2(SO_4)_3 + 6H_2O \cdots \qquad (2)$$

$$FeO + H_2SO_4 \rightarrow FeSO_4 + H_2O \cdots \qquad (3)$$

[Formula 2]

[High temperature thermal hydrolysis reaction]

$$2FeSO_4 + H_2SO_4 + 1/2O_2 \rightarrow Fe_2(SO_4)_3 + H_2O \cdots \qquad (4)$$

$$Fe_2(SO_4)_3 + 3H_2O \rightarrow Fe_2O_3 + 3H_2SO_4 \cdots \qquad (5)$$

The reaction temperature in the leaching step is 220 to 280°C, preferably 240 to 270°C.

That is, iron is fixed as hematite by performing the reactions in this temperature range.

If the reaction temperature is lower than 220°C, iron will remain dissolved in the reaction solution since the rate of the high temperature thermal hydrolysis reaction is slow. Therefore, the solution purification load for removing iron will increase, making it very difficult to separate iron from nickel. On the other hand, if the temperature is higher than 280°C, the high temperature thermal hydrolysis reaction itself will be accelerated, but it will be difficult to select a material of a vessel used in high pressure acid leach, and the steam cost for increasing temperature will also increase. Therefore, a temperature of higher than 280°C is not suitable.

The amount of sulfuric acid used in the leaching step is, but not particularly limited to, a slightly excessive amount relative to the stoichiometric amount required for iron in the ore to be leached and converted to hematite, for example, 300 to 400 kg per ton of the ore. Particularly, if the amount of sulfuric acid added per ton of the ore is more than 400 kg, the cost of sulfuric acid and the cost of a neutralizing agent in a subsequent step will increase. Therefore, such an amount is not preferred. Further, the amount of sulfuric acid used in view of a leaching step product is aimed to be 25 to 50 g/L, preferably 35 to 45 g/L, in terms of the concentration of free sulfuric acid at the completion of leaching.

By satisfying the above conditions, the true density of the leach residue is increased; a high density leach residue is stably produced; and the solid-liquid separability of the slurry is improved. As a result, the facilities of the solid-liquid separation step, which is the subsequent step, can be simplified.

That is, when the slurry containing the leaching residue is settled, if the above concentration is less than 25 g/L, the settling concentration of solids will be incomplete, and floating solids will remain in the supernatant. This is because the rate of high temperature thermal hydrolysis reaction is slow; dehydration of iron hydroxide does not proceed sufficiently; and hematite having a low true density is formed.

On the other hand, if the above concentration is more than 50 g/L, it will be necessary to improve the durability of leaching facilities, and the amount of a neutralizing agent required for neutralizing the acid will be significantly increased. Therefore, such a concentration is disadvantageous in terms of cost.

[3] Solid-Liquid Separation Step

The solid-liquid separation step is a step of subjecting the leach slurry formed in the previous leaching step to multi-stage washing to obtain a leachate containing nickel and cobalt and a leach residue. Thereby, nickel and the like which adhere to the leach residue and are discarded are recovered in the leachate

[4] Neutralization Step [Step (B-1) and Step (B-2)]

(4-1) Neutralization Step 1 [Treatment of Leachate] . Step (B-1)

Step (B-1) is a step of neutralizing the leachate 11 separated in the previous solid-liquid separation step, specifically a step of adding a neutralizing agent (pH adjuster) to the leachate 11 obtained in the leaching step so that it has a pH in the range of 4 or less, preferably 3.2 to 3.8, while suppressing the oxidation of the leachate 11, to form a residue after step (B-1) 26 as a neutralized precipitate slurry containing trivalent iron and mother liquor (1) 14 for nickel recovery.

By using this step, the excess acid used in the leaching step is neutralized, and trivalent iron ions remaining in the leachate are removed.

If pH exceeds 4 in the neutralization, the production of nickel hydroxide will increase.

Therefore, it is preferred to use, as a neutralizer, a Mg-based neutralizer which does not contain Ca, such as a Mg-based alkali such as $Mg(OH)_2$, and MgO which dissolves in the leachate and shows alkalinity.

When a neutralizing agent containing Ca, such as $CaCO_3$, is used, gypsum will be produced. A part of the residue after step (B-1) 26 as the neutralized precipitate slurry produced in this step is returned to the solid-liquid separation step and repeatedly used. Therefore, incorporation of gypsum into the leach residue slurry may occur, which does not give significant influence on the hematite grade since the amount of gypsum is small. Here, a Ca-based neutralizer may be used without problems.

[5] Zinc Removal Step

The zinc removal step is a step of blowing hydrogen sulfide gas into the mother liquor obtained in the previous step to produce a sulfide containing zinc to form a zinc sulfide precipitate slurry and mother liquor for nickel and cobalt recovery, prior to the step of separating nickel and cobalt as sulfides.

This is a step of selectively removing zinc by suppressing the rate of sulfurization reaction by generating mild conditions in the sulfurization reaction to suppress the co-precipitation of nickel which coexists at a higher concentration than zinc.

The resulting zinc sulfide precipitate slurry can be sent to the final neutralization step (7) and treated, similar to the neutralized precipitate slurry obtained in the neutralization step.

[6] Sulfurization Step

The sulfurization step is a step of blowing hydrogen sulfide into the mother liquor (2) for nickel and cobalt recovery obtained in the zinc removal step to produce a mixed sulfide (zinc sulfide precipitate) 17 containing nickel and cobalt and barren liquor 18.

Here, the resulting barren liquor 18 has a pH of about 1 to 3 and contains not only impurities such as iron, magnesium, and manganese which are contained without being sulfurized, but also a very small amount of nickel and cobalt as a recovery loss. Therefore, the barren liquor 18 is used as washing water for the leach residue in the solid-liquid separation step and as washing water for the neutralization residue produced in the neutralization step.

(4-2) Neutralization Step 2 [Treatment of Leach Residue Slurry]

· Step (B-2)

Step (B-2) is a step of neutralizing a part of the leach residue (leach residue slurry: represented by reference numeral 12 in Figure 1) produced in the solid-liquid separation step with a Mg-based neutralizing agent, such as a Mg-based alkali, such as Mg(OH)2, and MgO to recover hematite particles.

The method for step (B-2) is not particularly limited, but a Ca-based alkali is not used as a neutralizing agent. For example, if $CaCO_3$ is used as a neutralizing agent, it will react with adhering sulfuric acid to produce gypsum. Since the gypsum has low solubility, it is precipitated as a solid and increases the sulfur grade in the residue. On the other hand, since $MgSO_4$ has high solubility, it is not easily precipitated as a solid and effective for reducing sulfur.

Therefore, as a neutralizing agent, $Mg(OH)_2$ which is a Mg-based alkali is preferred, but a Mg-based neutralizing agent such as MgO may be used.

Here, the analysis of the distribution state of each component in the ore particles constituting the leach residue slurry 12 will be described.

First, Table 2 shows an example of the ore particle size distribution of the leach residue obtained by leaching the ore slurry obtained by crushing the ore to a particle size of about 2 mm or less and the grade of each component in each particle size section.

[Table 2]

| Particle size [μm] | Distribution [% by weight] | Chemical composition [% by weight] | | | |
|---|---|---|---|---|---|
| | | Fe | Cr | Si | Mg |
| -2000+1400 | 0.0 | - | - | - | - |
| +850 | 0.0 | - | - | - | - |
| +355 | 0.1 | 28.0 | 2.0 | 24.0 | 0.0 |
| +75 | 0.7 | 26.0 | 7.0 | 25.0 | 1.0 |
| -75 | 99.1 | 45.0 | 2.0 | 8.0 | 1.0 |
| Average | 100.0 | 44.6 | 2.5 | 7.8 | 1.0 |

As shown in Table 2, it can be seen that iron is concentrated in the fine particle portion having a particle size of 75 μm or less, and silicon is separated from this portion. Note that the analysis of the leach residue has been performed for a leach residue slurry which had been washed with water to remove adhering sulfuric acid.

From the above results, utilizing the fact that the particles containing iron in a high content are finer particles than particles containing chromium, silicon, and the like in high contents, the particles containing iron in a high content can be separated from the coarse particle portion containing chromium, silicon, and the like in high contents and driven away out of the system to recover hematite as a resource by screening means such as a classification method.

The classification method is preferably a treatment with a cyclone or the like which is capable of large-amount treatment.

[7] Final Neutralization Step

The final neutralization step is a step of adding the treatment solution after step (B-2) 27 obtained in step (B-2), the leach residue slurry 12 after the solid-liquid separation step which has not been treated in step (B-2), the residue after step (B-1) 26, and optionally a slurry formed from the zinc sulfide precipitate 15 obtained in the zinc removal step to prepare a mixture and further adding a limestone slurry and a slaked lime slurry to the mixture to adjust the pH to about 8 or 9, thereby precipitating metal ions in the solution as a neutralized precipitate to obtain a final neutralized residue 19. Note that the resulting final neutralized residue 19 is stored in the tailings dam 20.

Examples

Hereinafter, the present invention will be further described by Examples, but the present invention is not limited at all to these Examples.

In Examples, X-ray fluorescence analysis or ICP emission spectrometry was used for analyzing metals.

Example 1

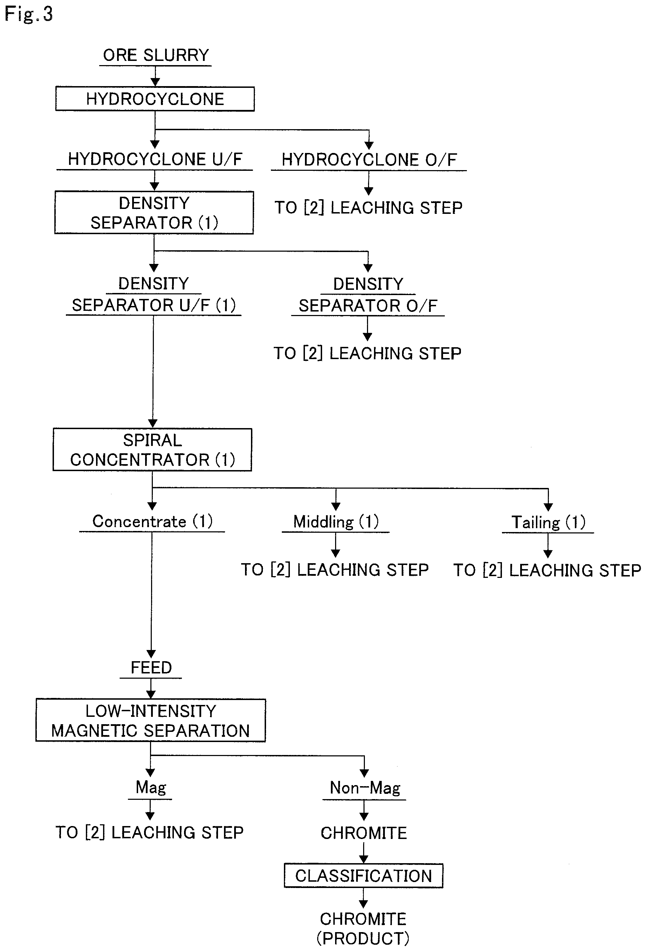

In the production flow of the present invention in Figure 1, the ore slurry 9 was subjected to step (A) according to the execution flow chart shown in Figure 3, in which the ore slurry 9 was subjected to classification with a hydrocyclone to separate goethite and then subjected to specific gravity separation once with a density separator and a spiral concentrator in combination in this order.

The ore slurry having the composition shown in Table 3 was classified using a hydrocyclone (manufactured by Daiki Ataka Engineering Co., Ltd., Model MD-9) as a classifier used in step (A).

In Example 1, the classification was performed under the conditions of a slurry concentration of 15% by weight, a slurry temperature of normal temperature, and an operating pressure of 0.2 MPa.

The ore slurry composition and the composition of the underflow from the hydrocyclone (hydrocyclone U/F) are shown together in Table 3. Note that the unit in the following tables is % by weight.

[Table 3]

| | $Cr_2O_3$ | $SiO_2$ | Fe | Ni |
|---|---|---|---|---|
| Ore slurry | 2.5 | 4.4 | 51.5 | 1.2 |
| Hydrocyclone U/F | 13.5 | 6.0 | 45.2 | 0.8 |

Unit: % by weight

As shown in Table 3, in the coarse particle portion obtained from the hydrocyclone (hydrocyclone U/F), the level of $Cr_2O_3$ increased to 13.5% by weight versus 2.5% by weight in the feed, and the level of $SiO_2$ increased to 6.0% by weight versus 4.4% by weight in the feed; on the other hand, the level of Fe decreased to 45.2% by weight versus the iron grade of 51.5% by weight in the feed.

The above results show that silica mineral and chromite are concentrated and separated in the coarse particle portion by the classification of the ore slurry.

Next, in order to grasp the separability of a density separator, the hydrocyclone U/F (slurry concentration: 33% by weight) was fed to a density separator (manufactured by Outotec, Inc., "Tanksizer TS-Lab", tank inside diameter: 228.6 mm).

The feed rate of the slurry was set to 56 [kg/Hr], and the slurry temperature was set to normal temperature.

The treatment was performed by setting the amount of Teeter water at this time to 6.9 [$m^3 \cdot h^{-1}/m^2$] and the set point (set value of a density meter) to 20.

The compositions of the feed to the density separator (hydrocyclone U/F) and the underflow from the density separator (density separator U/F) are shown in Table 4.

[Table 4]

|  | $Cr_2O_3$ | $SiO_2$ | Fe | Ni |
|---|---|---|---|---|
| Hydrocyclone U/F | 13.5 | 6.0 | 45.2 | 0.8 |
| Density separator U/F | 16.9 | 1.9 | 35.2 | 0.7 |

Unit: % by weight

As shown in Table 4, in the coarse particle portion obtained from the density separator (density separator U/F), the level of $Cr_2O_3$ increased to 16.9% by weight versus 13.5% by weight at the classification with the hydrocyclone (hydrocyclone U/F); on the other hand, the level of $SiO_2$ decreased to 1.9% by weight versus 6.0% by weight, and the level of iron decreased to 35.2% by weight versus 45.2% by weight.

The above results show that chromite is concentrated and separated in the coarse particle portion by the density separator treatment.

Further, in order to grasp the separability of a spiral concentrator, the hydrocyclone U/F (slurry concentration: 33% by weight) was subjected to a separation test with a spiral concentrator (manufactured by Outotec, Inc., "MC7000").

The results are shown in Table 5.

[Table 5]

|  | $Cr_2O_3$ | $SiO_2$ | Fe | Ni |
|---|---|---|---|---|
| Hydrocyclone U/F | 13.5 | 6.0 | 45.2 | 0.8 |
| Concentrate | 41.1 | 0.5 | 28.3 | 0.2 |
| Middling | 24.4 | 1.5 | 32.5 | 0.4 |
| Tailing | 5.3 | 4.2 | 48.0 | 1.5 |

Unit: % by weight

As shown in Table 5, in the "Concentrate" obtained from the spiral concentrator, the level of $Cr_2O_3$ increased to 41.1% by weight versus 13.5% by weight in the feed.

The level of $Cr_2O_3$ increased to 24.4% by weight in the Middling. On the other hand, the level of $Cr_2O_3$ was 5.3% by weight in the Tailing.

These results show that chromite is separated also by spiral treatment.

Then, according to the flow in Figure 3, the density separator U/F (1) (slurry concentration: 75% by weight) obtained from the density separator was diluted with water to a slurry concentration of 25% by weight, and the diluted slurry was subjected to a separation test with a spiral concentrator (manufactured by Outotec, Inc., "MC7000").

The results of the test are shown in Table 6.

[Table 6]

|  | Cr$_2$O$_3$ | SiO$_2$ | Fe | Ni |
|---|---|---|---|---|
| Density separator U/F | 16.9 | 1.9 | 35.2 | 0.7 |
| Concentrate | 41.2 | 0.6 | 28.5 | 0.3 |
| Middling | 24.3 | 1.6 | 32.7 | 0.5 |
| Tailing | 5.0 | 4.5 | 48.3 | 1.7 |

Unit: % by weight

As shown in Table 6, in the "Concentrate" obtained from the spiral concentrator, the level of Cr$_2$O$_3$ increased to 41.2% by weight versus 16.9% by weight in the feed.

In the Middling, the level of Cr$_2$O$_3$ increased to 24.3% by weight. On the other hand, in the Tailing, the level of Cr$_2$O$_3$ was 5.0% by weight.

These results show that chromite is separated by spiral treatment.

Next, the "Concentrate" obtained from the spiral test was diluted to a slurry concentration of 20% by weight, and the diluted slurry was fed to a low-intensity magnetic separator (manufactured by Outotec, Inc., "Inprosys benchtop LIMS") at a feed rate of 45.4 [kg/Hr] to obtain a magnetic material (Mag) and a non-magnetic material (Non-Mag).

The results are shown in Table 7.

[Table 7]

|  | Cr$_2$O$_3$ | SiO$_2$ | Fe | Ni |
|---|---|---|---|---|
| Feed | 41.2 | 0.6 | 28.5 | 0.3 |
| Mag | 29.5 | 0.8 | 43.7 | 0.4 |
| Non-Mag | 45.3 | 0.6 | 23.1 | 0.2 |

Unit: % by weight

As shown in Table 7, the level of Cr$_2$O$_3$ obtained from the low-intensity magnetic separation (non-magnetic material/Non-Mag) increased to 45.3% by weight versus 41.2% by weight in the feed. On the other hand, the level of Fe decreased to 23.1% by weight from 28.5% by weight.

In contrast, from the fact that the Fe grade of Cr$_2$O$_3$ (magnetic material/Mag) was as high as 43.7% by weight, it can be seen that hematite was separated and removed by magnetic separation, and the Cr$_2$O$_3$ grade of chromite increased.

From the above results, it can be said that the ore slurry can be concentrated to a concentration exceeding the Cr$_2$O$_3$ grade of generally commercially available chromite by sequentially treating the ore slurry with a hydrocyclone, with a density separator twice, and with a spiral concentrator.

Further, the recovery rate of the resulting chromite was 42.5% by weight.

Note that the recovery rate was determined by the following Formula (6).

[Expression 1]

$$\text{Recovery rate } [\%] = \text{weight of recovered } Cr_2O_3/\text{weight of } Cr_2O_3 \text{ in charged ore} \cdots (6)$$

Next, the chromite obtained by the low-intensity magnetic separation treatment was subjected to classification as shown below.

The non-magnetic slurry obtained by the low-intensity magnetic separation was subjected to classification with a classifier (manufactured by DALTON Co., Ltd.: vibrating screen 702CB) provided with a 53 μm-mesh screen and a 300 μm-mesh screen.

The results are shown in Table 8.

As shown in Table 8, the level of Cr$_2$O$_3$ obtained by the classification increased to 51.4% by weight versus 45.3% by weight in the feed.

On the other hand, the level of Fe increased from 23.1% by weight to 31.2% by weight.

From the above results, it can be said that, in the smelting method of the present invention shown in Example 1, the ore slurry can be concentrated to a concentration exceeding the $Cr_2O_3$ grade of generally commercially available chromite.

The recovery rate of the chromite obtained in Example 1 was 19%. Note that the recovery rate was determined by the Formula (6).

[Table 8]

|  | $Cr_2O_3$ | $SiO_2$ | Fe | Ni |
|---|---|---|---|---|
| Non-Mag | 45.3 | 0.4 | 23.1 | 0.1 |
| After classification | 51.4 | 0.4 | 31.2 | 0.1 |

Unit: % by weight

Example 2

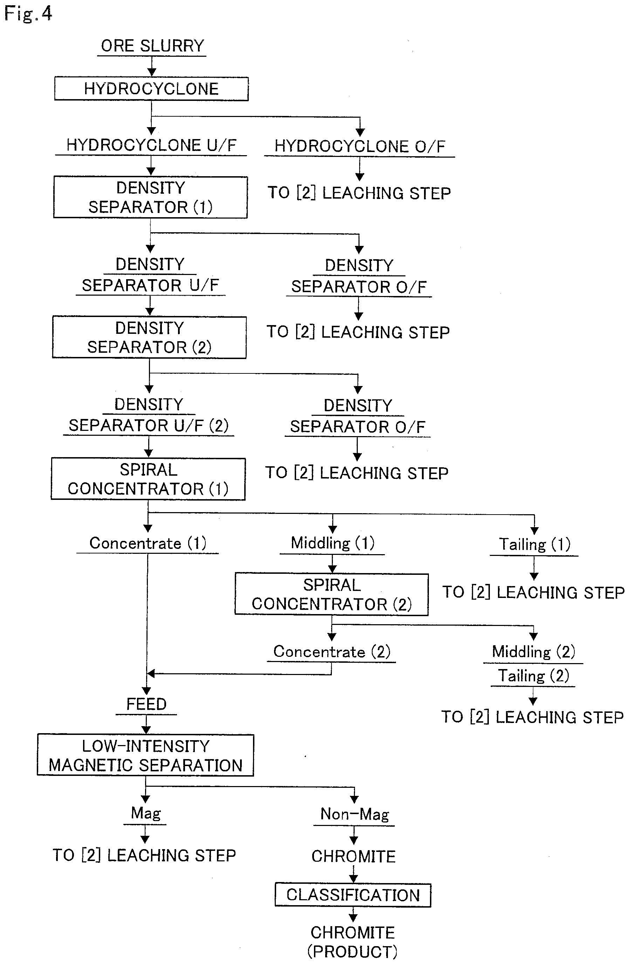

In the production flow of the present invention in Figure 1, the ore slurry was subjected to step (A) as shown in the execution flow chart of step (A) in Figure 4, in which the ore slurry was subjected to specific gravity separation repeatedly twice with a density separator and then subjected to specific gravity separation with a spiral concentrator.

First, the ore slurry having the composition shown in Table 9 was classified using a hydrocyclone (manufactured by Daiki Ataka Engineering Co., Ltd., Model MD-9) as a classifier used in step (A).

In Example 2, the classification was performed under the conditions of a slurry concentration of 15% by weight, a slurry temperature of normal temperature, and an operating pressure of 0.2 MPa.

The ore slurry composition and the composition of the hydrocyclone U/F are shown together in Table 9. Note that the unit in the following tables is % by weight.

[Table 9]

|  | $Cr_2O_3$ | $SiO_2$ | Fe | Ni |
|---|---|---|---|---|
| Ore slurry | 2.5 | 4.4 | 51.5 | 1.2 |
| Hydrocyclone U/F | 13.5 | 6.0 | 45.2 | 0.8 |

Unit: % by weight

As shown in Table 9, in the coarse particle portion obtained from the hydrocyclone (hydrocyclone U/F), the level of $Cr_2O_3$ increased to 13.5% by weight versus 2.5% by weight in the feed, and the level of $SiO_2$ increased to 6.0% by weight versus 4.4% by weight in the feed; on the other hand, the level of Fe decreased to 45.2% by weight versus the iron grade of 51.5% by weight in the feed.

The above results show that silica mineral and chromite are concentrated and separated in the coarse particle portion by the classification of the ore slurry.

Next, the hydrocyclone U/F (slurry concentration: 33% by weight) was fed to a density separator (manufactured by Outotec, Inc., "Tanksizer TS-Lab", tank inside diameter: 228.6 mm).

The feed rate of the slurry was set to 56 [kg/Hr], and the slurry temperature was set to normal temperature.

The treatment was performed by setting the amount of Teeter water at this time to 6.9 [$m^3 \cdot h^{-1}/m^2$] and the set point (set value of a density meter) to 20.

The compositions of the feed to the density separator (1) (hydrocyclone U/F) and the underflow from the density separator (1) (density separator U/F (1)) are shown in Table 10.

[Table 10]

|  | $Cr_2O_3$ | $SiO_2$ | Fe | Ni |
|---|---|---|---|---|
| Hydrocyclone U/F | 13.5 | 6.0 | 45.2 | 0.8 |
| Density separator U/F (1) | 16.9 | 1.9 | 35.2 | 0.7 |

Unit: % by weight

As shown in Table 10, in the coarse particle portion obtained from the density separator (1) (density separator U/F (1)), the level of $Cr_2O_3$ increased to 16.9% by weight versus 13.5% by weight at the cyclone classification (HC-U/F);

on the other hand, the level of $SiO_2$ decreased to 1.9% by weight versus 6.0% by weight, and the level of iron decreased to 35.2% by weight versus 45.2% by weight.

The above results show that chromite is concentrated and separated in the coarse particle portion by the density separator treatment.

The density separator U/F (1) (slurry concentration: 75% by weight) was diluted with water to a slurry concentration of 40% by weight, and the diluted slurry was subjected to the density separator treatment again. The compositions of the feed to the density separator (2) (density separator U/F (1) obtained by the first density separator treatment) and the underflow from the density separator (2) (density separator U/F (2) obtained by the second density separator treatment) are shown in Table 11.

[Table 11]

|  | $Cr_2O_3$ | $SiO_2$ | Fe | Ni |
|---|---|---|---|---|
| Density separator U/F (1) | 16.9 | 1.9 | 35.2 | 0.7 |
| Density separator U/F (2) | 21.1 | 1.3 | 30.6 | 0.4 |

Unit: % by weight

Table 11 shows that the level of $Cr_2O_3$ increased from 16.9% by weight to 21.1% by weight. It can be verified that the concentration of chromite proceeds by repeating the treatment with a density separator in this way.

Next, the density separator U/F (2) (slurry concentration: 75% by weight) obtained from the density separator (2) was diluted with water to a slurry concentration of 25% by weight, and the diluted slurry was subjected to a spiral test with a spiral concentrator (manufactured by Outotec, Inc., "MC7000").

The results of the test are shown in Table 12.

[Table 12]

|  | $Cr_2O_3$ | $SiO_2$ | Fe | Ni |
|---|---|---|---|---|
| Density separator U/F (2) | 21.1 | 1.3 | 30.6 | 0.4 |
| Concentrate | 44.5 | 0.4 | 24.8 | 0.2 |
| Middling (1) | 30.3 | 1.1 | 28.4 | 0.3 |
| Tailing | 6.3 | 3.0 | 42.0 | 1.1 |
| Unit: % by weight | | | | |

As shown in Table 12, in the "Concentrate" obtained from the spiral concentrator, the level of $Cr_2O_3$ increased to 44.5% by weight versus 21.1% by weight in the feed. In the Middling (1), the level of $Cr_2O_3$ increased to 30.3% by weight. On the other hand, in the Tailing, the level of $Cr_2O_3$ was 6.3% by weight.

These results show that chromite is separated by spiral treatment.

Next, the separation of the Middling (1) having a $Cr_2O_3$ concentration of 30.3% by weight was subjected to the spiral treatment again. The results are shown in Table 13.

[Table 13]

|  | $Cr_2O_3$ | $SiO_2$ | Fe | Ni |
|---|---|---|---|---|
| Middling (1) | 30.3 | 1.1 | 28.4 | 0.3 |
| Concentrate | 42.5 | 0.4 | 24.7 | 0.2 |
| Middling (2) | 19.4 | 1.8 | 27.6 | 0.5 |
| Tailing | 19.5 | 2.2 | 36.1 | 0.7 |

Unit: % by weight

As shown in Table 13, in the "Concentrate", the level of $Cr_2O_3$ increased to 42.5% by weight versus 30.3% by weight in the feed by subjecting the Middling (1) to the spiral treatment again. On the other hand, the level of $Cr_2O_3$ decreased to 19.4% by weight in the Middling (2) and to 19.5% by weight in the Tailing. These Middling (2) and Tailing may optionally be subjected to the spiral treatment again.

The "Concentrates" obtained by the two spiral tests were mixed and diluted to a slurry concentration of 20% by weight, and the diluted slurry was fed to a low-intensity magnetic separator (manufactured by Outotec, Inc., "Inprosys benchtop LIMS") at a feed rate of 45.4 [kg/Hr] to obtain a magnetic material (Mag) and a non-magnetic material (Non-Mag). The results are shown in Table 14.

[Table 14]

|  | $Cr_2O_3$ | $SiO_2$ | Fe | Ni |
|---|---|---|---|---|
| Feed | 44.1 | 0.4 | 24.7 | 0.2 |
| Mag | 31.6 | 0.6 | 36.6 | 0.3 |
| Non-Mag | 48.5 | 0.4 | 20.0 | 0.1 |

Unit: % by weight

As shown in Table 14, the level of $Cr_2O_3$ obtained from the low-intensity magnetic separation (non-magnetic material/Non-Mag) increased to 48.5% by weight versus 44.1% by weight in the feed. On the other hand, the level of Fe decreased to 20.0% by weight from 24.7% by weight.

In contrast, since the Fe grade of $Cr_2O_3$ (magnetic material/Mag) was as high as 36.6% by weight, it can be seen that magnetite was separated and removed by magnetic separation, and the $Cr_2O_3$ grade of chromite increased.

From the above results, the ore slurry can be concentrated to a concentration exceeding the $Cr_2O_3$ grade of generally commercially available chromite by sequentially treating the ore slurry with a hydrocyclone, with a density separator twice, and with a spiral concentrator.

Further, the recovery rate of the resulting chromite was 44% by weight.

The recovery rate was determined by Formula (6) in the same manner as in Example 1.

Next, the chromite obtained by the low-intensity magnetic separation treatment was subjected to classification as shown below.

The non-magnetic slurry obtained by the low-intensity magnetic separation was subjected to classification with a classifier (manufactured by DALTON Co., Ltd.: vibrating screen 702CB) provided with a 53 $\mu$m-mesh screen and a 300 $\mu$m-mesh screen.

The results are shown in Table 15.

As shown in Table 15, the level of $Cr_2O_3$ obtained by the classification increased to 55.0% by weight versus 48.5% by weight in the feed. On the other hand, the level of Fe increased from 20.0% by weight to 27.0% by weight.

From the above results, it can be said that, in the smelting method of the present invention shown in Example 2, the ore slurry can be concentrated to a concentration exceeding the $Cr_2O_3$ grade of generally commercially available chromite.

The recovery rate of the chromite obtained in Example 2 was 20%. Note that the recovery rate was determined by the Formula (6) in the same manner as in Example 1.

[Table 15]

|  | $Cr_2O_3$ | $SiO_2$ | Fe | Ni |
|---|---|---|---|---|
| Non-Mag | 48.5 | 0.4 | 20.0 | 0.1 |
| After classification | 55.0 | 0.4 | 27.0 | 0.1 |

Unit: % by weight

(Comparative Example 1)

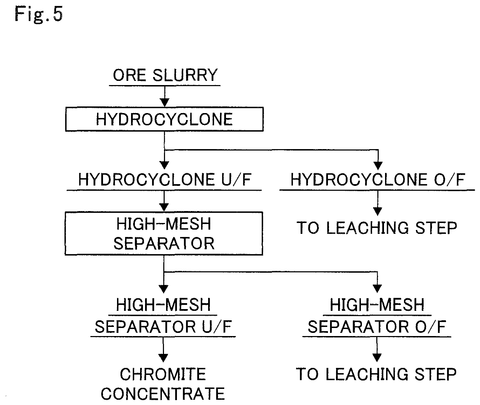

After the classification with a hydrocyclone according to the execution flow in Comparative Example 1 shown in Figure 5, the separation was performed using a high-mesh separator by the size of solids contained in the ore slurry, instead of the specific gravity separation in Example 1.

The ore slurry was classified using a hydrocyclone (manufactured by Daiki Ataka Engineering Co., Ltd., Model "MD-9") as a classifier.

Here, the classification was performed under the conditions of a slurry concentration of 9.8% by weight, a slurry temperature of normal temperature, and an operating pressure of 0.22 MPa.

The hydrocyclone underflow (hydrocyclone U/F) having a slurry concentration of 33% by weight was diluted to a slurry concentration of 4.9% by weight, and the diluted slurry was charged into a high-mesh separator (manufactured by Kikosha Co., Ltd., "KUC-612S").

The feed rate to the high-mesh separator was 0.98 [m³/hour] ; the rotation speed of the bucket was 0.8 rpm; the bucket length was 75 mm; and the bucket had holes each having a diameter of 4 mm opened at a pitch of 6 mm, in which the rate of hole area was 40%.

The amount of washing water was set to 6 m³/hour.

The compositions of the ore slurry and the hydrocyclone underflow (hydrocyclone U/F) and the composition of the underflow of the high-mesh separator (high-mesh separator U/F) are shown in Table 16.

[Table 16]

|  | $Cr_2O_3$ | Ni |
|---|---|---|
| Ore slurry | 4.1 | 1.1 |
| Hydrocyclone U/F | 13.0 | 0.8 |
| High-mesh separator U/F | 19.1 | 0.5 |

Unit: % by weight

As is obvious from Table 16, the $Cr_2O_3$ grade was concentrated from 4.1% by weight in the ore slurry to 13.0% by weight in the coarse particle portion of the hydrocyclone (hydrocyclone U/F), and to 19.1% by weight in the coarse particle portion of the high-mesh separator (high-mesh separator U/F), but the target level of the composition of commercially available products was not obtained.

In this step, although there was no particular problem in the concentration with the hydrocyclone, it can be determined that the concentration with the high-mesh separator is insufficient.

Then, the cause was investigated as follows.

Each of the underflows (hydrocyclone U/F and high-mesh separator U/F) was sieved with a 75 μm-mesh screen, and the oversize and the undersize of the 75 μm-mesh screen were analyzed to obtain the results shown in Table 17.

[Table 17]

|  | Size [μm] | Distribution [% by weight] | Grade [% by weight] | | | | | |
|---|---|---|---|---|---|---|---|---|
|  |  |  | Cr | $Cr_2O_3$ | Fe | Ni | Total Cr | Total $Cr_2O_3$ |
| Hydrocyclone U/F | +75 | 43 | 16.7 | 24.4 | 36.0 | 0.5 | 8.9 | 13.0 |
|  | -75 | 57 | 3.0 | 4.4 | 50.6 | 1.0 | | |
| High-mesh separator U/F | +75 | 85 | 14.2 | 20.7 | 38.1 | 0.5 | 13.1 | 19.1 |
|  | -75 | 15 | 6.7 | 9.8 | 49.8 | 0.7 | | |

In Table 17, the Cr grade of the underflow of the high-mesh separator (high-mesh separator U/F) was 14.2% by weight (20.7% by weight in terms of $Cr_2O_3$), which was lower than 16.7% by weight (24.4% by weight in terms of $Cr_2O_3$) of the underflow of the hydrocyclone (hydrocyclone U/F). Thus, it was found that the specific gravity separation was not achieved at all.

These results reveal that the high-mesh separator worked only for slime removal and did not work for specific gravity separation.

Thus, it is found that the ore slurry cannot be concentrated to chromite having a $Cr_2O_3$ grade equivalent to the level of commercially available products unless specific gravity separation is performed.

Example 3

The overflow of the hydrocyclone and the overflow of the density separator in Example 1 were charged into an autoclave at a solid weight ratio of 77:15, and thereto was added 98% sulfuric acid. The resulting mixture was subjected to high pressure sulfuric acid leach under the following conditions to produce a leach slurry 10.

Further, the produced leach slurry was separated into a leachate 11 and a leach residue slurry 12 by a solid-liquid separation step.

[Leaching Conditions]

Leaching temperature: 245°C
Leaching time: 60 minutes
Final (at the completion of leaching) free sulfuric-acid concentration: 40 [g/L]
Slurry concentration: 30% by weight
Autoclave volume: 5 L
Next, in order to know the $Cr_2O_3$ grade in the leach residue slurry 12, $Mg(OH)_2$ slurry having a concentration of 20% by weight as a neutralizing agent was added to the leach residue slurry 12 to neutralize the leach residue slurry so that it might have a pH of 2.5 at 70°C.
Next, the slurry was subjected to solid-liquid separation using 5C filter paper followed by adding the Mg(OH)2 slurry until the resulting slurry has a pH of 6, and the resulting slurry was then further subjected to solid-liquid separation using 5 C filter paper.
The $Cr_2O_3$ grade of the resulting final neutralized residue was 0.9% by weight. Since $MgSO_4$ produced has high solubility, the residue had a sulfur grade of 0.53% by weight.

(Comparative Example 2)

When the ore slurry in Example 1 was treated in the same manner as in Example 3 except that the ore slurry was charged into an autoclave without treating the slurry with the hydrocyclone and the density separator, the $Cr_2O_3$ grade of the resulting final neutralized residue was 2.1% by weight.
Since $MgSO_4$ produced has high solubility, the residue had a sulfur grade of 0.53% by weight.
As is obvious from a comparison between Example 3 and Comparative Example 2, chromite in the ore slurry was able to be separated and removed to halve the $Cr_2O_3$ grade in the residue by first classifying the ore slurry with the hydrocyclone and then treating with the density separator which is one of the specific gravity separation apparatuses.

(Comparative Example 3)

A leach residue slurry 12 was prepared in the same manner as in Example 3; a slaked lime slurry with a concentration of 25% by weight was added as a neutralizing agent to the entire amount of the leach residue slurry to neutralize the slurry to a pH of 8.5 at 60°C to precipitate metal ions as a precipitate; and a neutralization residue and a treatment solution after neutralization were obtained by solid-liquid separation.
The neutralization residue was subjected to cyclone classification to separate hematite 28.
A slaked lime slurry with a concentration of 25% by weight was added to a mixed solution obtained by mixing the treatment solution after neutralization with a remaining neutralization residue from which hematite 28 had been separated, and the resulting mixture was then repeatedly subjected to solid-liquid separation with 5C filter paper to obtain a final neutralized residue.
The resulting final neutralized residue had a $Cr_2O_3$ grade of 0.8% by weight. Since $CaSO_4$ produced has low solubility, the residue had a sulfur grade of 5.72% by weight and a Ca grade of 8.49% by weight.

(Comparative Example 4)

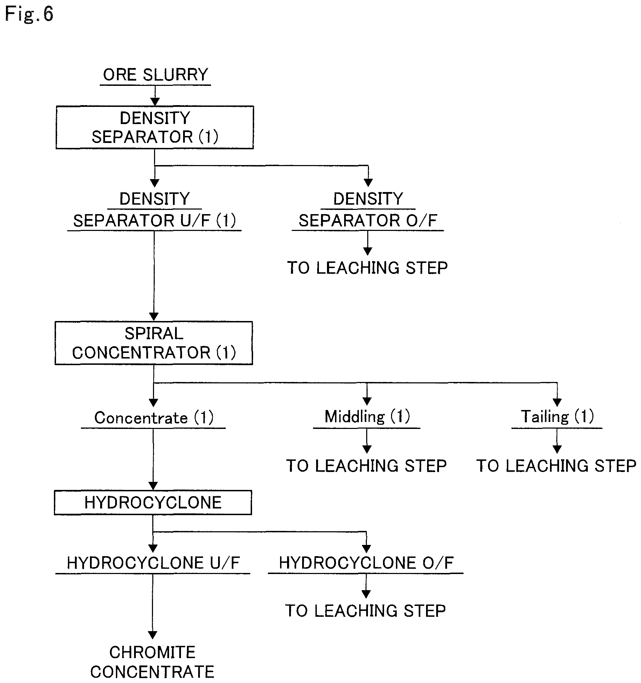

As shown in the execution flow chart of Comparative Example 4 in Figure 6, the separation test was performed under the same conditions as in Example 1 except that the ore slurry was subjected to the specific gravity separation once in the same manner as in Example 1 without the classification with the hydrocyclone and finally subjected to the classification with the hydrocyclone.
Table 18 shows the results obtained by subjecting the ore, which had not been subjected to the classification with the hydrocyclone, to the specific gravity separation with the density separator.
The $Cr_2O_3$ concentration of the underflow from the density separator was not as high as that of the underflow obtained by treating a feed which had been subjected to classification (refer to the density separator U/F in Table 4), probably because the feed (ore slurry) had a high viscosity.

[Table 18]

|  | $Cr_2O_3$ | $SiO_2$ | Fe | Ni |
|---|---|---|---|---|
| Feed | 2.5 | 4.4 | 51.5 | 1.2 |
| Density separator U/F | 9.5 | 2.5 | 40.2 | 1.0 |

Unit: % by weight

The results of the separation of the density separator U/F with a spiral concentrator are shown in Table 19.

As is obvious from Table 19, even when the specific gravity separation with the spiral concentrator was performed, the $Cr_2O_3$ concentration was 25.3% by weight, which was less than 41% by weight.

This is probably because since coarse particles and fine particles are not separated in the density separator, the slurry viscosity is high, and the effect of the spiral concentrator cannot be exhibited.

[Table 19]

|  | $Cr_2O_3$ | $SiO_2$ | Fe | Ni |
|---|---|---|---|---|
| Density separator U/F | 9.5 | 2.5 | 40.2 | 1.0 |
| Concentrate | 25.3 | 0.8 | 32.6 | 0.5 |
| Middling | 13.6 | 2.1 | 37.3 | 0.8 |
| Tailing | 2.8 | 5.9 | 55.2 | 2.6 |

Unit: % by weight

Subsequently, classification with the hydrocyclone was performed.

As shown in Table 20, the concentration of $Cr_2O_3$ was 35.3% by weight, which did not satisfy 41% by weight or more.

[Table 20]

|  | $Cr_2O_3$ | $SiO_2$ | Fe | Ni |
|---|---|---|---|---|
| Concentrate | 25.3 | 0.8 | 32.6 | 0.5 |
| Hydrocyclone U/F | 35.3 | 2.5 | 28.6 | 0.2 |

Unit: % by weight

It was impossible to concentrate the ore slurry up to a concentration that is higher than the $Cr_2O_3$ grade of generally commercially available chromite. Thus, it is found that it is important in chromite recovery to remove fine particles by performing cyclone classification first.

Industrial Applicability

As is obvious from the above results, the hydrometallurgical process for nickel oxide ore of the present invention is suitable as a smelting method based on high pressure acid leach utilized in the hydrometallurgical field of nickel oxide ore.

Reference Signs List

8   Nickel oxide ore
9   Ore slurry
10   Leach slurry
11   Leachate
12   Leach residue slurry
14   Mother liquor (1)
15   Zinc sulfide precipitate
16   Mother liquor (2)
17   Ni and Co mixed sulfide
18   Barren liquor
19   Final neutralized residue
20   Tailings dam
22   Autoclave feed slurry
23   Chromite

26     Residue after step (B-1)
27     Treatment solution after step (B-2)
28     Hematite

**Claims**

1. A hydrometallurgical process for nickel oxide ore for recovering nickel and cobalt using a high pressure acid leach process comprising an ore processing step, a leaching step, a solid-liquid separation step, a neutralization step, a zinc removal step, a sulfurization step, and a final neutralization step, the hydrometallurgical process further comprising,
   step (A) : a step of separating chromite particles from an ore slurry produced in the ore processing step by a recovery process of performing specific gravity separation which includes a step of using a density separator and a step of using a spiral concentrator and then performing magnetic separation, and then classifying the chromite particles under a condition of 53 μm or more and less than 300 μm to recover a high-concentration chromite concentrate having a grade of chromium(III) oxide of 41% by weight or more.

2. A hydrometallurgical process for nickel oxide ore for recovering nickel and cobalt using a high pressure acid leach process comprising an ore processing step, a leaching step, a solid-liquid separation step, a neutralization step, a zinc removal step, a sulfurization step, and a final neutralization step according to claim 1, the hydrometallurgical process further comprising the following step (B-1) or step (B-2) after the step (A) :

   step (B-1) : a neutralization step of subjecting a leachate to neutralization with at least one of a calcium-based neutralizing agent and a magnesium-based neutralizing agent, the leachate being produced by subjecting the ore slurry, in which the chromium grade has been reduced by separating the chromite particles in the step (A), sequentially to the leaching step and the solid-liquid separation step; and
   step (B-2): a neutralization step of subjecting a leach residue slurry to neutralization with a magnesium-based neutralizing agent, the leach residue slurry being produced by subjecting the ore slurry, in which the chromium grade has been reduced by separating the chromite particles in the step (A), sequentially to the leaching step and the solid-liquid separation step, to thereby recover hematite particles from the leach residue slurry.

3. A hydrometallurgical process for nickel oxide ore for recovering nickel and cobalt using a high pressure acid leach process comprising an ore processing step, a leaching step, a solid-liquid separation step, a neutralization step, a zinc removal step, a sulfurization step, and a final neutralization step according to claim 1, the hydrometallurgical process further comprising the following step (B-1) and step (B-2) after the step (A) :

   step (B-1) : a neutralization step of subjecting a leachate to neutralization with at least one of a calcium-based neutralizing agent and a magnesium-based neutralizing agent, the leachate being produced by subjecting the ore slurry, in which the chromium grade has been reduced by separating the chromite particles in the step (A), sequentially to the leaching step and the solid-liquid separation step; and
   step (B-2): a neutralization step of subjecting a leach residue slurry to neutralization with a magnesium-based neutralizing agent, the leach residue slurry being produced by subjecting the ore slurry, in which the chromium grade has been reduced by separating the chromite particles in the step (A), sequentially to the leaching step and the solid-liquid separation step, to thereby recover hematite particles from the leach residue slurry.

4. The hydrometallurgical process for nickel oxide ore according to any one of claims 1 to 3, wherein the recovery process in the step (A) comprises subjecting the ore slurry to classification with a cyclone to form a particulate iron-leaned ore slurry in which fine iron hydroxide particles have been reduced, and then recovering chromite particles contained in the particulate iron-leaned ore slurry from the particulate iron-leaned ore slurry as a chromite concentrate using specific gravity separation.

5. The hydrometallurgical process for nickel oxide ore according to claim 4, wherein the recovery process in the step (A) comprises subjecting the ore slurry to classification with a cyclone without diluting the slurry concentration of the ore slurry.

6. The hydrometallurgical process for nickel oxide ore according to any one of claims 1 to 5, wherein the recovery process in the step (A) comprises collecting a whole amount of the chromite excluding unavoidable loss into an underflow in the classification with the cyclone.

7. The hydrometallurgical process for nickel oxide ore according to claim 1, wherein the step of using a density separator comprises treating a concentrated slurry with the density separator twice or more.

8. The hydrometallurgical process for nickel oxide ore according to claim 1, wherein the step of using a spiral concentrator comprises treating a concentrated slurry with the spiral concentrator twice or more.

9. The hydrometallurgical process for nickel oxide ore according to claim 1 or 8, wherein a pulp content of the slurry fed to the spiral concentrator is 15 to 35% by weight of solid.

10. The hydrometallurgical process for nickel oxide ore according to claim 1 or 7, wherein an amount of Teeter water fed to the density separator is 0.5 to 7.0 [m$^3$·h$^{-1}$/m$^2$].

11. The hydrometallurgical process for nickel oxide ore according to any one of claims 1 to 10, wherein the chromite concentrate separated by the specific gravity separation is subjected to magnetic separation which is a physical separation to remove magnetite from the chromite concentrate as a magnetic material and recover a non-magnetic material as a high-concentration chromite concentrate.

12. The hydrometallurgical process for nickel oxide ore according to claim 2 or 3, wherein the step (B-2) comprises setting pH after the neutralization at 4 to 7 and after the neutralization, performing final neutralization with an alkali other than the magnesium-based neutralizing agent.

13. The hydrometallurgical process for nickel oxide ore according to claim 2 or 3, wherein the step (B-2) comprises subjecting the leach residue slurry or a neutralized residue slurry including the leach residue slurry to classification with a cyclone to recover a classified fine particle portion obtained by the classification as a concentrate of hematite.

14. The hydrometallurgical process for nickel oxide ore according to any one of claims 1 to 13, wherein
the ore processing step is a step of performing removal of foreign matter from mined raw ore and particle size adjustment of the ore to form an ore slurry;
the leaching step is a step of adding sulfuric acid to the ore slurry and stirring a resulting mixture at high temperature and high pressure to form a leach slurry composed of a leach residue and a leachate;
the solid-liquid separation step is a step of subjecting the leach slurry to multi-stage washing to obtain a leachate containing nickel and cobalt and a leach residue slurry;
the neutralization step is a step of adding an alkali to the leachate to form a neutralized precipitate slurry containing trivalent iron and a mother liquor for nickel recovery;
the zinc removal step is a step of blowing hydrogen sulfide gas into the mother liquor to form a zinc sulfide precipitate slurry and a mother liquor for nickel and cobalt recovery;
the sulfurization step is a step of blowing hydrogen sulfide into the mother liquor for nickel and cobalt recovery to produce a mixed sulfide containing nickel and cobalt and a barren liquor; and
the final neutralization step is a step of adding excess of the barren liquor to the leach residue slurry and adjusting pH to 8 to 9 to obtain a final neutralized residue.

15. The hydrometallurgical process for nickel oxide ore according to any one of claims 1 to 14, wherein the particle size adjustment in the ore processing step is performed by sieving with a particle size of 2 mm or less.

**Patentansprüche**

1. Hydrometallurgisches Verfahren für Nickeloxiderz zum Gewinnen von Nickel und Kobalt unter Verwendung eines Hochdruck-Säurelaugungsverfahrens, umfassend einen Erzverarbeitungsschritt, einen Laugungsschritt, einen Fest-Flüssig-Trennschritt, einen Neutralisationsschritt, einen Zinkentfernungsschritt, einen Sulfurierungsschritt und einen Endneutralisationsschritt, wobei das hydrometallurgische Verfahren ferner umfasst:
Schritt (A): ein Schritt des Abtrennens von Chromitpartikeln aus einer bei dem Erzverarbeitungsschritt hergestellten Erzaufschlämmung durch ein Gewinnungsverfahren des Durchführens einer Trennung über das spezifische Gewicht, das einen Schritt der Verwendung einer Dichtetrennvorrichtung und einen Schritt der Verwendung eines Spiralkonzentrators und dann Durchführen von magnetischer Trennung umfasst, und dann Klassieren der Chromitpartikel unter einer Bedingung von 53 μm oder mehr und weniger als 300 μm, um ein hochkonzentriertes Chromitkonzentrat mit einem Gehalt an Chrom(III)-oxid von 41 Gew.-% oder mehr zu gewinnen.

2. Hydrometallurgisches Verfahren für Nickeloxiderz zum Gewinnen von Nickel und Kobalt unter Verwendung eines Hochdruck-Säurelaugungsverfahrens, umfassend einen Erzverarbeitungsschritt, einen Laugungsschritt, einen Fest-Flüssig-Trennschritt, einen Neutralisationsschritt, einen Zinkentfernungsschritt, einen Sulfurierungsschritt und einen Endneutralisationsschritt, gemäß Anspruch 1, wobei das hydrometallurgische Verfahren ferner den folgenden Schritt (B-1) oder Schritt (B-2) nach dem Schritt (A) umfasst:

Schritt (B-1) : ein Neutralisationsschritt des Unterwerfens einer Laugungslösung an Neutralisation mit wenigstens einem von einem Neutralisationsmittel auf Calciumbasis und einem Neutralisationsmittel auf Magnesiumbasis, wobei die Laugungslösung durch Unterwerfen der Erzaufschlämmung, in der bei dem Schritt (A) der Chromgehalt durch Abtrennen der Chromitpartikel verringert worden ist, nacheinander an den Laugungsschritt und den Fest-Flüssig-Trennschritt erzeugt wird; und

Schritt (B-2): ein Neutralisationsschritt des Unterwerfens einer Laugungsrückstand-Aufschlämmung an Neutralisation mit einem Neutralisationsmittel auf Magnesiumbasis, wobei die Laugungsrückstand-Aufschlämmung durch Unterwerfen der Erzaufschlämmung, in der bei dem Schritt (A) der Chromgehalt durch Abtrennen der Chromitpartikel verringert worden ist, nacheinander an den Laugungsschritt und den Fest-Flüssig-Trennschritt erzeugt wird, um dadurch Hämatitpartikel aus der Laugungsrückstand-Aufschlämmung zu gewinnen.

3. Hydrometallurgisches Verfahren für Nickeloxiderz zum Gewinnen von Nickel und Kobalt unter Verwendung eines Hochdruck-Säurelaugungsverfahrens, umfassend einen Erzverarbeitungsschritt, einen Laugungsschritt, einen Fest-Flüssig-Trennschritt, einen Neutralisationsschritt, einen Zinkentfernungsschritt, einen Sulfurierungsschritt und einen Endneutralisationsschritt, gemäß Anspruch 1, wobei das hydrometallurgische Verfahren ferner den folgenden Schritt (B-1) und den Schritt (B-2) nach dem Schritt (A) umfasst:

Schritt (B-1) : ein Neutralisationsschritt des Unterwerfens einer Laugungslösung an Neutralisation mit wenigstens einem von einem Neutralisationsmittel auf Calciumbasis und einem Neutralisationsmittel auf Magnesiumbasis, wobei die Laugungslösung durch Unterwerfen der Erzaufschlämmung, in der bei dem Schritt (A) der Chromgehalt durch Abtrennen der Chromitpartikel verringert worden ist, nacheinander an den Laugungsschritt und den Fest-Flüssig-Trennschritt erzeugt wird; und

Schritt (B-2): ein Neutralisationsschritt des Unterwerfens einer Laugungsrückstand-Aufschlämmung an Neutralisation mit einem Neutralisationsmittel auf Magnesiumbasis, wobei die Laugungsrückstand-Aufschlämmung durch Unterwerfen der Erzaufschlämmung, in der bei dem Schritt (A) der Chromgehalt durch Abtrennen der Chromitpartikel verringert worden ist, nacheinander an den Laugungsschritt und den Fest-Flüssig-Trennschritt erzeugt wird, um dadurch Hämatitpartikel aus der Laugungsrückstand-Aufschlämmung zu gewinnen.

4. Hydrometallurgisches Verfahren für Nickeloxiderz gemäß einem der Ansprüche 1 bis 3, wobei das Gewinnungsverfahren bei dem Schritt (A) Unterwerfen der Erzaufschlämmung an Klassierung mit einem Zyklon, um eine Erzaufschlämmung mit verringerter Menge von partikelförmigem Eisen zu bilden, in der die Menge von feinen Eisenhydroxidpartikeln verringert worden ist, und dann Gewinnen von Chromitpartikeln, die in der Erzaufschlämmung mit verringerter Menge von partikelförmigem Eisen enthalten sind, aus der Erzaufschlämmung mit verringerter Menge von partikelförmigem Eisen als Chromitkonzentrat unter Verwendung von Trennung über das spezifische Gewicht umfasst.

5. Hydrometallurgisches Verfahren für Nickeloxiderz gemäß Anspruch 4, wobei das Gewinnungsverfahren bei dem Schritt (A) Unterwerfen der Erzaufschlämmung an Klassierung mit einem Zyklon ohne Verdünnen der Aufschlämmungskonzentration der Erzaufschlämmung umfasst.

6. Hydrometallurgisches Verfahren für Nickeloxiderz gemäß einem der Ansprüche 1 bis 5, wobei das Gewinnungsverfahren bei dem Schritt (A) Sammeln der gesamten Menge des Chromits, mit der Ausnahme von unvermeidbarem Verlust, in einen Unterlauf bei der Klassierung mit dem Zyklon umfasst.

7. Hydrometallurgisches Verfahren für Nickeloxiderz gemäß Anspruch 1, wobei der Schritt der Verwendung einer Dichtetrennvorrichtung die Behandlung einer konzentrierten Aufschlämmung mit der Dichtetrennvorrichtung zweimal oder öfter umfasst.

8. Hydrometallurgisches Verfahren für Nickeloxiderz gemäß Anspruch 1, wobei der Schritt der Verwendung eines Spiralkonzentrators die Behandlung einer konzentrierten Aufschlämmung mit dem Spiralkonzentrator zweimal oder öfter umfasst.

9. Hydrometallurgisches Verfahren für Nickeloxiderz gemäß einem der Ansprüche 1 bis 8, wobei der Schlammgehalt der Aufschlämmung, die dem Spiralkonzentrator zugeführt wird, 15 % bis 35 % Feststoff beträgt.

10. Hydrometallurgisches Verfahren für Nickeloxiderz gemäß Anspruch 1 oder 7, wobei die Menge an Wippwasser, die der Dichtetrennvorrichtung zugeführt wird, 0,5 bis 7,0 $[m^3 \cdot h^{-1}/m^2]$ beträgt.

11. Hydrometallurgisches Verfahren für Nickeloxiderz gemäß einem der Ansprüche 1 bis 10, wobei das durch die Trennung über das spezifische Gewicht abgetrennte Chromitkonzentrat magnetischer Trennung unterzogen wird, die eine physikalische Trennung ist, um Magnetit als ein magnetisches Material aus dem Chromitkonzentrat zu entfernen und ein nichtmagnetisches Material als ein hochkonzentriertes Chromitkonzentrat zu gewinnen.

12. Hydrometallurgisches Verfahren für Nickeloxiderz gemäß Anspruch 2 oder 3, wobei der Schritt (B-2) Einstellen des pH-Werts nach der Neutralisation auf 4 bis 7 und nach der Neutralisation Durchführen von Endneutralisation mit einem Alkali, das von dem Neutralisationsmittel auf Magnesiumbasis verschieden ist, umfasst.

13. Hydrometallurgisches Verfahren für Nickeloxiderz gemäß Anspruch 2 oder 3, wobei der Schritt (B-2) Unterwerfen der Laugungsrückstand-Aufschlämmung oder einer neutralisierten Rückstand-Aufschlämmung, die die Laugungsrückstand-Aufschlämmung enthält, einer Klassierung mit einem Zyklon, um einen klassierten Feinpartikelanteil, der durch die Klassierung erhalten wird, als Konzentrat von Hämatit zu gewinnen.

14. Hydrometallurgisches Verfahren für Nickeloxiderz gemäß einem der Ansprüche 1 bis 13, wobei der Erzverarbeitungsschritt ein Schritt der Durchführung des Entfernens von Fremdmaterial aus abgebautem Roherz und Einstellen der Partikelgröße des Erzes ist, um eine Erzaufschlämmung zu bilden;
der Laugungsschritt ein Schritt des Zugebens von Schwefelsäure zu der Erzaufschlämmung und Rühren eines erhaltenen Gemischs bei hoher Temperatur und hohem Druck ist, um eine Laugungsaufschlämmung zu bilden, die aus einem Laugungsrückstand und einer Laugungslösung besteht;
der Fest-Flüssig-Trennschritt ein Schritt des Unterwerfens der Laugungsaufschlämmung an mehrstufiges Waschen ist, um eine Laugungslösung, die Nickel und Kobalt enthält, und eine Laugungsrückstand-Aufschlämmung zu erhalten;
der Neutralisationsschritt ein Schritt des Zugebens eines Alkalis zu der Laugungslösung ist, um eine neutralisierte Präzipitat-Aufschlämmung, die dreiwertiges Eisen enthält, und eine Mutterlauge zur Nickelgewinnung zu bilden;
der Zinkentfernungsschritt ein Schritt des Einblasens von Schwefelwasserstoffgas in die Mutterlauge ist, um eine Zinksulfidpräzipitat-Aufschlämmung und eine Mutterlauge zur Gewinnung von Nickel und Kobalt zu bilden;
der Sulfurierungsschritt ein Schritt des Einblasens von Schwefelwasserstoff in die Mutterlauge zur Gewinnung von Nickel und Kobalt ist, um ein Mischsulfid, das Nickel und Kobalt enthält, und eine magere Lauge zu erhalten; und
der Endneutralisationsschritt ein Schritt des Zugebens eines Überschusses der mageren Lauge zu der Laugungsrückstand-Aufschlämmung und des Einstellens des pH-Werts auf etwa 8 bis 9, um einen endneutralisierten Rückstand zu erhalten, ist.

15. Hydrometallurgisches Verfahren für Nickeloxiderz gemäß einem der Ansprüche 1 bis 14, wobei das Einstellen der Partikelgröße bei dem Erzverarbeitungsschritt durch Sieben auf eine Partikelgröße von 2 mm oder weniger durchgeführt wird.

**Revendications**

1. Procédé hydrométallurgique pour du minerai d'oxyde de nickel pour la récupération de nickel et de cobalt à l'aide d'un procédé de lixiviation acide sous haute pression comprenant une étape de traitement de minerai, une étape de lixiviation, une étape de séparation solide-liquide, une étape de neutralisation, une étape d'élimination de zinc, une étape de sulfuration et une étape de neutralisation finale, le procédé hydrométallurgique comprenant en outre, l'étape (A) : une étape consistant à séparer des particules de chromite d'une suspension épaisse de minerai produite dans l'étape de traitement de minerai par un procédé de récupération consistant à effectuer une séparation suivant le poids spécifique qui comprend une étape consistant à utiliser un séparateur suivant la densité et une étape consistant à utiliser un concentrateur à spirale et ensuite effectuer une séparation magnétique, et ensuite classifier les particules de chromite dans des conditions de 53 $\mu$m ou plus et moins de 300 $\mu$m pour récupérer un concentré de chromite à haute concentration ayant une teneur en oxyde de chrome(III) supérieure ou égale à 41 %.

2. Procédé hydrométallurgique pour du minerai d'oxyde de nickel pour la récupération de nickel et de cobalt à l'aide d'un procédé de lixiviation acide sous haute pression comprenant une étape de traitement de minerai, une étape de lixiviation, une étape de séparation solide-liquide, une étape de neutralisation, une étape d'élimination de zinc, une étape de sulfuration et une étape de neutralisation finale selon la revendication 1, le procédé hydrométallurgique comprenant en outre l'étape (B-1) ou étape (B-2) suivante après l'étape (A) :

étape (B-1) : une étape de neutralisation consistant à soumettre un lixiviat à une neutralisation avec au moins l'un d'un agent de neutralisation à base de calcium et d'un agent de neutralisation à base de magnésium, le lixiviat étant produit par le fait de soumettre la suspension épaisse de minerai, dans laquelle la teneur en chrome a été réduite par séparation des particules de chromite dans l'étape (A), séquentiellement à l'étape de lixiviation et à l'étape de séparation solide-liquide ; et

étape (B-2) : une étape de neutralisation consistant à soumettre une suspension épaisse de résidu de lixiviation à une neutralisation avec un agent de neutralisation à base de magnésium, la suspension épaisse de résidu de lixiviation étant produite par le fait de soumettre la suspension épaisse de minerai, dans laquelle la teneur en chrome a été réduite par séparation des particules de chromite dans l'étape (A), séquentiellement à l'étape de lixiviation et à l'étape de séparation solide-liquide, pour de cette manière récupérer des particules d'hématite à partir de la suspension épaisse de résidu de lixiviation.

3. Procédé hydrométallurgique pour du minerai d'oxyde de nickel pour la récupération de nickel et de cobalt à l'aide d'un procédé de lixiviation acide sous haute pression comprenant une étape de traitement de minerai, une étape de lixiviation, une étape de séparation solide-liquide, une étape de neutralisation, une étape d'élimination de zinc, une étape de sulfuration et une étape de neutralisation finale selon la revendication 1, le procédé hydrométallurgique comprenant en outre l'étape (B-1) et l'étape (B-2) suivantes après l'étape (A) :

étape (B-1) : une étape de neutralisation consistant à soumettre un lixiviat à une neutralisation avec au moins l'un d'un agent de neutralisation à base de calcium et d'un agent de neutralisation à base de magnésium, le lixiviat étant produit par le fait de soumettre la suspension épaisse de minerai, dans laquelle la teneur en chrome a été réduite par séparation des particules de chromite dans l'étape (A), séquentiellement à l'étape de lixiviation et à l'étape de séparation solide-liquide ; et

étape (B-2) : une étape de neutralisation consistant à soumettre une suspension épaisse de résidu de lixiviation à une neutralisation avec un agent de neutralisation à base de magnésium, la suspension épaisse de résidu de lixiviation étant produite par le fait de soumettre la suspension épaisse de minerai, dans laquelle la teneur en chrome a été réduite par séparation des particules de chromite dans l'étape (A), séquentiellement à l'étape de lixiviation et à l'étape de séparation solide-liquide, pour de cette manière récupérer des particules d'hématite à partir de la suspension épaisse de résidu de lixiviation.

4. Procédé hydrométallurgique pour du minerai d'oxyde de nickel selon l'une quelconque des revendications 1 à 3, dans lequel le procédé de récupération dans l'étape (A) comprend le fait de soumettre la suspension épaisse de minerai à une classification avec un cyclone pour former une suspension épaisse de minerai appauvrie en fer particulaire dans laquelle de fines particules d'hydroxyde de fer ont été réduites et ensuite la récupération de particules de chromite contenues dans la suspension épaisse de minerai appauvrie en fer particulaire à partir de la suspension épaisse de minerai appauvrie en fer particulaire sous forme d'un concentré de chromite à l'aide d'une séparation suivant le poids spécifique.

5. Procédé hydrométallurgique pour du minerai d'oxyde de nickel selon la revendication 4, dans lequel le procédé de récupération dans l'étape (A) comprend le fait de soumettre la suspension épaisse de minerai à une classification avec un cyclone sans dilution de la concentration de suspension épaisse de la suspension épaisse de minerai.

6. Procédé hydrométallurgique pour du minerai d'oxyde de nickel selon l'une quelconque des revendications 1 à 5, dans lequel le procédé de récupération dans l'étape (A) comprend le recueil d'une quantité totale de la chromite à l'exclusion de la perte inévitable dans une sousverse dans la classification avec le cyclone.

7. Procédé hydrométallurgique pour du minerai d'oxyde de nickel selon la revendication 1, dans lequel l'étape consistant à utiliser un séparateur suivant la densité comprend le traitement d'une suspension épaisse concentrée avec le séparateur suivant la densité à deux ou plus de deux reprises.

8. Procédé hydrométallurgique pour du minerai d'oxyde de nickel selon la revendication 1, dans lequel l'étape consistant à utiliser un concentrateur à spirale comprend le traitement d'une suspension épaisse concentrée avec le concentrateur spirale à deux ou plus de deux reprises.

**9.** Procédé hydrométallurgique pour du minerai d'oxyde de nickel selon la revendication 1 ou 8, dans lequel une teneur en pulpe de la suspension épaisse amenée à alimenter le concentrateur à spirale est de 15 % à 35 % en poids de matière solide.

**10.** Procédé hydrométallurgique pour du minerai d'oxyde de nickel selon la revendication 1 ou 7, dans lequel une quantité d'eau de fluidisation amenée à alimenter le séparateur suivant la densité est de 0,5 à 7,0 $[m^3.h^{-1}/m^2]$.

**11.** Procédé hydrométallurgique pour du minerai d'oxyde de nickel selon l'une quelconque des revendications 1 à 10, dans lequel le concentré de chromite séparé par la séparation suivant le poids spécifique est soumis à une séparation magnétique qui est une séparation physique pour éliminer la magnétite du concentré de chromite sous forme d'un matériau magnétique et récupérer un matériau non magnétique sous forme d'un concentré de chromite à haute concentration.

**12.** Procédé hydrométallurgique pour du minerai d'oxyde de nickel selon la revendication 2 ou 3, dans lequel l'étape (B-2) comprend le réglage du pH après la neutralisation à 4 à 7 et après la neutralisation, le fait d'effectuer une neutralisation finale avec une substance alcaline autre que l'agent de neutralisation à base de magnésium.

**13.** Procédé hydrométallurgique pour du minerai d'oxyde de nickel selon la revendication 2 ou 3, dans lequel l'étape (B-2) comprend le fait de soumettre la suspension épaisse de résidu de lixiviation ou une suspension épaisse de résidu neutralisée comprenant la suspension épaisse de résidu de lixiviation à une classification avec un cyclone pour récupérer une portion de fines particules classifiée obtenue par la classification sous forme d'un concentré d'hématite.

**14.** Procédé hydrométallurgique pour du minerai d'oxyde de nickel selon l'une quelconque des revendications 1 à 13, dans lequel
l'étape de traitement de minerai est une étape consistant à effectuer l'élimination de matière étrangère de minerai brut extrait de la mine et l'ajustement de la taille des particules du minerai pour former une suspension épaisse de minerai ;
l'étape de lixiviation est une étape consistant à ajouter de l'acide sulfurique à la suspension épaisse de minerai et agiter un mélange résultant à une température élevée et une pression élevée pour former une suspension épaisse de lixiviation composée d'un résidu de lixiviation et d'un lixiviat ;
l'étape de séparation solide-liquide est une étape consistant soumettre la suspension épaisse de lixiviation à un lavage en de multiples étages pour obtenir un lixiviat contenant du nickel et du cobalt et une suspension épaisse de résidu de lixiviation ; l'étape de neutralisation est une étape consistant à ajouter une substance alcaline au lixiviat pour former une suspension épaisse de précipité neutralisée contenant du fer trivalent et une liqueur mère pour la récupération de nickel ;
l'étape d'élimination de zinc est une étape consistant à injecter du sulfure d'hydrogène gazeux dans la liqueur mère pour former une suspension épaisse de précipité de sulfure de zinc et une liqueur mère pour la récupération de nickel et de cobalt ;
l'étape de sulfuration est une étape consistant à injecter du sulfure d'hydrogène dans la liqueur mère pour la récupération de nickel et de cobalt pour produire un sulfure mixte contenant du nickel et du cobalt et une liqueur stérile ; et
l'étape de neutralisation finale est une étape consistant à ajouter un excès de la liqueur stérile à la suspension épaisse de résidu de lixiviation et ajuster le pH à 8 à 9 pour obtenir un résidu neutralisé final.

**15.** Procédé hydrométallurgique pour du minerai d'oxyde de nickel selon l'une quelconque des revendications 1 à 14, dans lequel l'ajustement de la taille des particules dans l'étape de traitement de minerai est effectué par criblage avec une taille des particules inférieure ou égale à 2 mm.

Fig.1

NICKEL OXIDE ORE 8
↓
[1] ORE PROCESSING STEP
↓
ORE SLURRY 9
↓
STEP (A)
↓
AUTOCLAVE FEED SLURRY 22          CHROMITE 23
↓
[2] LEACHING STEP
↓
LEACH SLURRY 10
↓
[3] SOLID-LIQUID SEPARATION STEP

LEACHATE 11                    LEACH RESIDUE SLURRY 12
↓                                        ↓
STEP (B-1)                            STEP (B-2)

RESIDUE AFTER        MOTHER          TREATMENT      HEMATITE 28
STEP (B-1) 26       LIQUOR (1) 14     SOLUTION
                                     AFTER STEP
                                       (B-2) 27
↓
[5] ZINC REMOVAL STEP

                                  [7] FINAL NEUTRALIZATION STEP
                                           ↓
ZINC SULFIDE        MOTHER          FINAL NEUTRALIZED
PRECIPITATE 15     LIQUOR (2) 16      RESIDUE 19
                                           ↓
                                    TAILINGS DAM 20
↓
[6] SULFURIZATION STEP

Ni-Co MIXED      BARREN LIQUOR 18
SULFIDE 17

## Fig.2

NICKEL OXIDE ORE 8

↓

(1) ORE PROCESSING STEP

↓

ORE SLURRY 9

↓

(2) LEACHING STEP

↓

LEACH SLURRY 10

↓

(3) SOLID-LIQUID SEPARATION STEP

LEACHATE 11          LEACH RESIDUE SLURRY 12

(4) NEUTRALIZATION STEP

NEUTRALIZED          MOTHER          (7) FINAL
PRECIPITATE          LIQUOR (1) 14    NEUTRALIZATION STEP
SLURRY 13

(5) ZINC             FINAL NEUTRALIZED
REMOVAL STEP         RESIDUE 19

ZINC SULFIDE         MOTHER           TAILINGS DAM 20
PRECIPITATE 15       LIQUOR (2) 16

(6) SULFURIZATION STEP

Ni-Co MIXED          BARREN LIQUOR 18
SULFIDE 17

Fig.3

ORE SLURRY

HYDROCYCLONE

HYDROCYCLONE U/F      HYDROCYCLONE O/F

DENSITY SEPARATOR (1)      TO [2] LEACHING STEP

DENSITY SEPARATOR U/F (1)      DENSITY SEPARATOR O/F

TO [2] LEACHING STEP

SPIRAL CONCENTRATOR (1)

Concentrate (1)      Middling (1)      Tailing (1)

TO [2] LEACHING STEP      TO [2] LEACHING STEP

FEED

LOW-INTENSITY MAGNETIC SEPARATION

Mag      Non-Mag

TO [2] LEACHING STEP      CHROMITE

CLASSIFICATION

CHROMITE (PRODUCT)

Fig.4

Fig.5

```
                    ORE SLURRY
                         │
                         ▼
              ┌──────────────────────┐
              │     HYDROCYCLONE     │
              └──────────────────────┘
                         │
                 ┌───────┴──────────────────────┐
                 ▼                               ▼
          HYDROCYCLONE U/F              HYDROCYCLONE O/F
                 │                               │
                 ▼                               ▼
        ┌──────────────────┐             TO LEACHING STEP
        │    HIGH-MESH     │
        │   SEPARATOR      │
        └──────────────────┘
                 │
          ┌──────┴───────────────────────┐
          ▼                               ▼
      HIGH-MESH                       HIGH-MESH
    SEPARATOR U/F                   SEPARATOR O/F
          │                               │
          ▼                               ▼
       CHROMITE                    TO LEACHING STEP
      CONCENTRATE
```

Fig.6

ORE SLURRY

DENSITY
SEPARATOR (1)

DENSITY
SEPARATOR U/F (1)　　　DENSITY
　　　　　　　　　　　SEPARATOR O/F

　　　　　　　　　　　TO LEACHING STEP

SPIRAL
CONCENTRATOR (1)

Concentrate (1)　　　Middling (1)　　　Tailing (1)

　　　　　　　　　TO LEACHING STEP　　TO LEACHING STEP

HYDROCYCLONE

HYDROCYCLONE U/F　　HYDROCYCLONE O/F

　　　　　　　　　　TO LEACHING STEP

CHROMITE
CONCENTRATE

**EP 3 133 177 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013095971 A
- JP H06116660 B
- JP 2005350766 A
- JP 2010095788 A